(19) Europäisches Patentamt / European Patent Office / Office européen des brevets

(11) **EP 4 787 028 A1**

(12) **EUROPEAN PATENT APPLICATION**
published in accordance with Art. 153(4) EPC

(43) Date of publication:
**05.08.2026 Bulletin 2026/32**

(21) Application number: **24872592.1**

(22) Date of filing: **30.09.2024**

(51) International Patent Classification (IPC):
**G02B 5/20** (2006.01)   **G02F 1/1335** (2006.01)
**G02F 1/13357** (2006.01)

(52) Cooperative Patent Classification (CPC):
**G02B 5/20; G02F 1/1335; G02F 1/1336**

(86) International application number:
**PCT/JP2024/034946**

(87) International publication number:
**WO 2025/070813 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170553**

(71) Applicant: **Toppan Holdings Inc.**
**Tokyo 110-0016 (JP)**

(72) Inventors:
• **MIYANAGA, Akiharu**
  **Tokyo 110-0016 (JP)**
• **ITO, Tetsuji**
  **Tokyo 110-0016 (JP)**

(74) Representative: **TBK**
**Bavariaring 4-6**
**80336 München (DE)**

(54) **QUANTUM DOTS, QUANTUM DOT-CONTAINING SHEET AND METHOD FOR MANUFACTURING SAME, AND BACKLIGHT DEVICE OR DISPLAY DEVICE**

(57) An object is to provide quantum dots that enable obtaining a sheet with a quantum dot layer thickness of 50 $\mu$m or less and good aging durability against degradation from the sheet edges, a quantum dot-containing sheet using the quantum dots, and a backlight device or a display device. Quantum dots of the present invention do not include RoHS-regulated substances and have a higher absorption coefficient at 450 nm than InP. In the present invention, the quantum dots preferably includes a core formed from an I-III-VI chalcopyrite system. It is preferable that Group I includes at least one of Ag and Cu, Group III includes at least one of Ga and In, and Group VI includes at least one of S, Se and Te. A quantum dot-containing sheet formed by curing a quantum dot-containing composition including the quantum dots of the present invention, wherein the quantum dot-containing sheet has a quantum dot layer thickness of 50 $\mu$m or less. It is preferable that degradation from the edges of the sheet is 500 $\mu$m or less.

## Description

[Technical Field]

The present invention relates to quantum dots, a quantum dot-containing sheet and a method of manufacturing the same, and a backlight device or a display device.

[Background Art]

It is considered that the suppression of degradation from the edges of a quantum dot-containing sheet depends significantly on the structure of the quantum dots, the resin in which the quantum dots are dispersed, etc.

The following patent documents aim to improve durability by addressing the resin applied to the resin composition containing quantum dots, the structure of the laminate film, etc.

However, there is no particular disclosure regarding quantum dots that can suppress degradation from the sheet edges while keeping the sheet layer thickness thin.

[Citation List]

[Patent Literature]

PTL 1: JP 2016-511709 T

PTL 2: JP 5940079 B

PTL 3: WO 2018/056469 A

PTL 4: KR 10-1969561 B1

PTL 5: JP 2017-032918 A

PTL 6: JP 2019-086555 A

PTL 7: JP 2018-124412 A

PTL 8: JP 2017-214486 A

[Summary of the Invention]

[Technical Problem]

The present invention has been made in view of the above circumstances and aims to provide quantum dots that enable obtaining a sheet with a quantum dot layer thickness of 50 $\mu$m or less and good aging durability against degradation from the sheet edges, a quantum dot-containing sheet using the quantum dots, a method for manufacturing the same, and a backlight device or a display device.

[Solution to Problem]

Quantum dots of the present invention do not include RoHS-regulated substances and have a higher absorption coefficient at 450 nm than InP.

[Advantageous Effects of the Invention]

By using the quantum dots of the present invention, it is possible to achieve a quantum dot layer thickness of 50 $\mu$m or less and obtain a sheet with good aging durability against degradation from the sheet edges.

[Brief Description of the Drawings]

Fig. 1 is a schematic diagram of a quantum dot.

Fig. 2 is a longitudinal cross-sectional view of a quantum dot-containing sheet according to a first embodiment of the present invention.

Fig. 3 is a longitudinal cross-sectional view of a quantum dot-containing sheet according to a second embodiment of the present invention.

Fig. 4 is a longitudinal cross-sectional view of a quantum dot-containing sheet according to a third embodiment of the present invention.

Fig. 5 is a perspective view of the quantum dot-containing sheet of the present embodiment.

Fig. 6 is a longitudinal cross-sectional view of a display device using the quantum dot-containing sheet of the present embodiment.

Fig. 7 is a longitudinal cross-sectional view of a display device that is different from the one shown in Fig. 6 and uses the quantum dot-containing sheet of the present embodiment.

Fig. 8 is a longitudinal cross-sectional view of a liquid crystal display element using the quantum dot-containing sheet of the present embodiment.

Fig. 9 is a cross-sectional view showing an example of the quantum dot-containing sheet of the present embodiment.

Fig. 10 is a cross-sectional view showing an example of manufacturing of the quantum dot-containing sheet of the present embodiment.

Fig. 11A is a cross-sectional view of a quantum dot-containing sheet having a substrate film provided on both sides of the quantum dot layer.

Fig. 11B is a cross-sectional view of a quantum dot-containing sheet having a substrate film on only one side of the quantum dot layer, after peeling off one of the substrate films shown in Fig. 11A.

Fig. 12 is a conceptual diagram of a manufacturing device for manufacturing the quantum dot-containing sheet of the present embodiment.

Fig. 13A is a plot showing the relationship between wavelength and absorption coefficient for chalcopyrite quantum dots as an example and an InP comparative example.

Fig. 13B is a plot showing the relationship between wavelength and absorption coefficient for chalcopyrite quantum dots as an example and an InP comparative example.

Fig. 13C shows EDX mapping for Ag and Ga in its upper part and a schematic diagram of a portion thereof in its lower part.

Fig. 13D shows EDX mapping for Zn and S in its upper part and a schematic diagram of a portion thereof in its lower part.

Fig. 14 is a plot showing the relationship between wavelength (400 nm to 700 nm) and luminance obtained using a quantum dot-containing direct-type optical element with a partially reflective sheet and a quantum dot-containing direct-type optical element without a partially reflective sheet.

Fig. 15 is a plot showing the relationship between wavelength (400 nm to 700 nm) and luminance obtained using a quantum dot-containing direct-type optical element with a partially reflective sheet (and with a DBEF) and a quantum dot-containing direct-type optical element without a partially reflective sheet (but with a DBEF).

Fig. 16 is a plot showing the relationship between wavelength (500 nm to 700 nm) and luminance obtained using a quantum dot-containing direct-type optical element with a partially reflective sheet and a quantum dot-containing direct-type optical element without a partially reflective sheet.

Fig. 17 is a plot showing the relationship between wavelength (500 nm to 700 nm) and luminance obtained using a quantum dot-containing direct-type optical element with a partially reflective sheet (and with a DBEF) and a quantum dot-containing direct-type optical element without a partially reflective sheet (and without a DBEF).

Fig. 18 is a plot showing the relationship between wavelength (400 nm to 700 nm) and luminance obtained using a quantum dot-containing direct-type optical element with a partially reflective sheet and a quantum dot-containing direct-type optical element without a partially reflective sheet.

Fig. 19 is a plot showing the relationship between wavelength (400 nm to 700 nm) and luminance obtained using a quantum dot-containing direct-type optical element with a partially reflective sheet and a quantum dot-containing direct-type optical element without a partially reflective sheet.

Fig. 20 is a plot showing the relationship between wavelength (500 nm to 700 nm) and luminance obtained using a quantum dot-containing direct-type optical element with a partially reflective sheet and a quantum dot-containing direct-type optical element without a partially reflective sheet.

Fig. 21 is a plot showing the relationship between wavelength (500 nm to 700 nm) and luminance obtained using a quantum dot-containing direct-type optical element with a partially reflective sheet and a quantum dot-containing direct-type optical element without a partially reflective sheet.

Fig. 22 is a schematic diagram of Sample 7.

Fig. 23 is a schematic diagram of Sample 8.

Fig. 24 is a schematic diagram of Sample 9.

Fig. 25 is a schematic diagram of Sample 10.

Fig. 26 is a schematic diagram of Sample 11.

Fig. 27 is a schematic diagram of Sample 12.

Fig. 28A is a light emission spectrum of the backlight.

Fig. 28B is a light emission spectrum of Example 1.

Fig. 28C is a light emission spectrum of Example 2.

Fig. 29 shows photographs and schematic diagrams of the degradation mode of the present example.

Fig. 30 shows a schematic diagram of an application example of the quantum dot-containing sheet of the present example.

[Description of the Embodiments]

The following describes in detail embodiments of the present invention. However, it merely describes example (representative example) embodiments of the present description, and the present invention is not limited to these embodiments as long as it does not exceed the scope of the invention. Furthermore, the notation "to" used below indicates that both the lower and upper limit values are included within the range.

<Quantum Dots>

The quantum dots used in this embodiment are nanoparticles with a particle size of several nm to tens of nm that absorb excitation light and efficiently emit light. The peak wavelength of light emission can be controlled based on the composition and particle size of the nanoparticles. For display material applications, quantum dots emitting red light and green light are preferably used. In some cases, quantum dots emitting blue light may also be used, and quantum dots with suitable wavelengths can be used in this embodiment as well.

The quantum dots of this embodiment are characterized by not containing RoHS-regulated substances and having a higher absorption coefficient at 450 nm than InP. Thus, RoHS-regulated substances such as cadmium or lead are not included in the constituent elements of the quantum dots. Furthermore, the quantum dots of this embodiment have a higher absorption coefficient at 450 nm than commercially available cadmium-free InP quantum dots.

The quantum dots of this embodiment have a core formed of an I-III-VI chalcopyrite system.

Specifically, the core is an $Ag\text{-}Ga\text{-}S_2$ system. The Group I element may be Cu instead of Ag, or both Ag and Cu may be included.

The Group III element may be In instead of Ga, or both Ga and In may be included.

The Group VI element may be Se or Te instead of S, or S and Se, S and Te, Se and Te, or S, Se, and Te may be included.

In this embodiment, for example, the quantum dots are formed of an $AgIn_xGa_{1-x}S_ySe_{1-y}$ system or a $ZnAgIn_xGa_{1-x}S_ySe_{1-y}$ system ($0 \leq x < 1, 0 \leq y \leq 1$). The quantum dots in this embodiment are preferably nanocrystals that contain at least silver (Ag), gallium (Ga), and sulfur (S), or silver (Ag), gallium (Ga), and selenium (Se), and do not contain cadmium (Cd). The quantum dots may also contain indium (In) or zinc (Zn) in addition to Ag, Ga, and S, or Ag, Ga, and Se.

Here, "nanocrystals" refers to nanoparticles having a particle size of several nm to tens of nm. In this embodiment, a large number of quantum dots can be generated with a substantially uniform particle size.

The ratio of Ag to Ga contained in the quantum dots is preferably in the range of Ag/Ga = 0.05 or more and 10 or less. The ratio Ag/Ga is more preferably in the range of 0.05 or more and 5 or less, and even more preferably in the range of 0.1 or more and 3 or less.

The ratio of Zn to Ga that can be contained in the quantum dots is preferably in the range of Zn/Ga = 0.1 or more and 10 or less. The ratio Zn/Ga is more preferably in the range of 0.1 or more and 5 or less. The light emission wavelength can be adjusted by controlling this ratio.

In this embodiment, the fluorescence wavelength can be adjusted within the green to red wavelength range. In particular, in this embodiment, the fluorescence wavelength can be appropriately adjusted within the range of 400 nm or more and 700 nm or less. In this embodiment, the fluorescence wavelength can also be adjusted within the range of 500 nm or more and 650 nm or less.

In this embodiment, the quantum dots have a shell layer formed on the surface of the core via a buffer layer. The buffer layer is a region where at least some or all of the elements constituting the core are mixed with at least some or all of the elements constituting the shell layer.

The shell layer is preferably ZnS. In addition, the shell layer surface preferably has ligands.

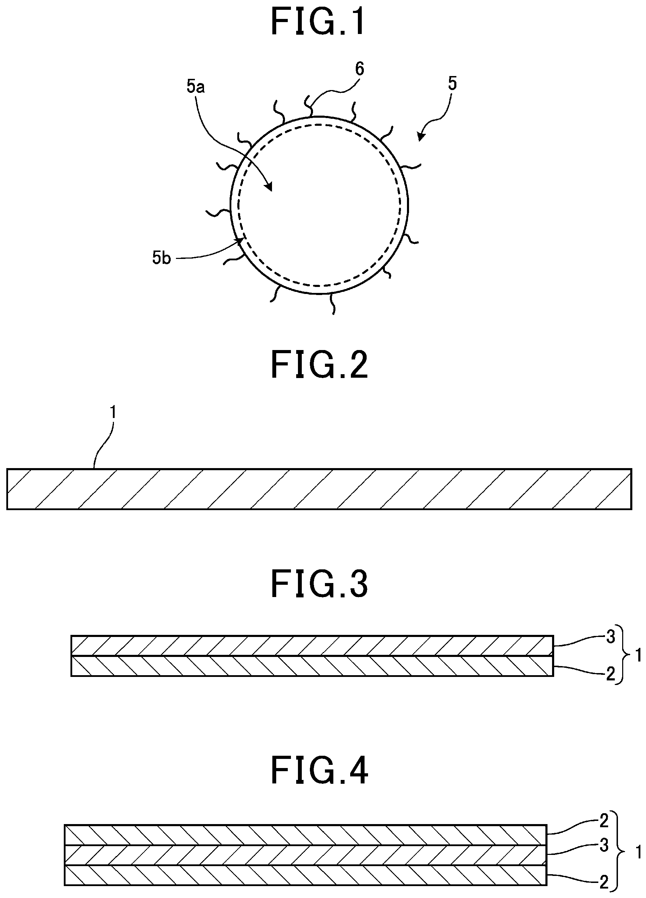

Fig. 1 is a schematic diagram of a quantum dot. As shown in Fig. 1, the quantum dot 5 includes a core 5a, a shell layer 5b formed on its surface, and organic ligands 6 disposed on the surface of the shell layer 5b.

To suppress aggregation of the quantum dots 5 and obtain good optical properties, it is preferable that a large number of organic ligands 6 are coordinated on the surface of the quantum dots 5.

Examples of ligands used in the present embodiment include, but are not limited to, aliphatic amine compounds such as oleylamine: $C_{18}H_{35}NH_2$, stearyl (octadecyl)amine: $C_{18}H_{37}NH_2$, dodecyl (lauryl)amine: $C_{12}H_{25}NH_2$, decylamine: $C_{10}H_{21}NH_2$, and octylamine: $C_8H_{17}NH_2$;

fatty acid compounds such as fatty acids, oleic acid: $C_{17}H_{33}COOH$, stearic acid: $C_{17}H_{35}COOH$, palmitic acid: $C_{15}H_{31}COOH$, myristic acid: $C_{13}H_{27}COOH$, lauric (dodecanoic) acid: $C_{11}H_{23}COOH$, decanoic acid: $C_9H_{19}COOH$, and octanoic acid: $C_7H_{15}COOH$;

thiol compounds such as octadecanethiol: $C_{18}H_{37}SH$, hexadecanethiol: $C_{16}H_{33}SH$, tetradecanethiol: $C_{14}H_{29}SH$, dodecanethiol: $C_{12}H_{25}SH$, decanethiol: $C_{10}H_{21}SH$, and octanethiol: $C_8H_{17}SH$;

phosphine compounds such as trioctylphosphine: $(C_8H_{17})_3P$, triphenylphosphine: $(C_6H_5)_3P$, tributylphosphine: $(C_4H_9)_3P$, and

phosphine oxide compounds such as trioctylphosphine oxide: $(C_8H_{17})_3P{=}O$, triphenylphosphine oxide: $(C_6H_5)_3P{=}O$, and tributylphosphine oxide: $(C_4H_9)_3P{=}O$.

These may be used alone or in any combination of two or more.

Although not shown in Fig. 1, a buffer layer is formed between the core 5a and the shell layer 5b. The shell layer 5b is preferably formed of zinc sulfide (ZnS), but it is also possible to use zinc selenide (ZnSe) instead.

In this embodiment, the structure is core/buffer layer (a mixed layer of core and shell layer)/shell layer. Examples of the buffer layer include $AgGaS_2$, $(AgZnGa)S_2$, $AgGaSe_2$, and $(AgZnGa)Se_2$. Fig. 1 illustrates the boundary between the core 5a and the shell layer 5b using a dotted line, but this means that it does not important whether the boundary between the core 5a and the shell layer 5b can be clearly confirmed by analysis. Although not illustrated, the buffer layer is interposed along the dotted line.

Quantum dots that emit green light with a peak wavelength of 520 to 560 nm (hereinafter referred to as green quantum dots) and quantum dots that emit red light with a peak wavelength of 600 to 680 nm (hereinafter referred to as red quantum dots) are suitably used as the quantum dots in this embodiment.

The quantum dots of this embodiment absorb blue light at 450 nm, and the absorption coefficient is higher than that of InP.

Quantum dots with a fluorescence full width at half maximum (FWHM) of 40 nm or less, preferably 35 nm or less, and more preferably 30 nm or less, are suitably used in this embodiment.

The amount of quantum dots contained in the quantum dot-containing composition described subsequently is preferably in the range of 0.03% by mass or more and 2% by mass or less, more preferably in the range of 0.05% by mass or more and 1% by mass or less, relative to 100% by mass of the total amount of polyfunctional (meth)acrylate and polyfunctional thiol. Thus, when the quantum dot content is within the range of 0.03 to 2% by mass, sufficient light emission intensity can be provided by the quantum dots.

<Quantum Dot-Containing Composition>

In this embodiment, a composition containing quantum dots, including the above-described quantum dots, is produced. In addition to the quantum dots, it contains polyfunctional (meth)acrylate, polyfunctional thiol, and a reaction retarder.

In this embodiment, by adjusting the composition, core-shell structure, and ligands of the quantum dots, and by optimizing the dispersion resin, it is possible to achieve a thin sheet while effectively suppressing degradation at the sheet edges. The following describes the substances contained in the quantum dot-containing composition.

(Polyfunctional (Meth)acrylate)

Polyfunctional (meth)acrylates have two or more (meth)acrylate groups within a single molecule. In this embodiment, a cured film can be obtained by radical polymerization of a polyfunctional (meth)acrylate and the polyfunctional thiol described below using the photoinitiator described below. This cured film can significantly improve the durability of the quantum dots in this embodiment. Furthermore, when fabricating a quantum dot-containing sheet, it also functions as an adhesive for bonding two plastic films together.

Examples of polyfunctional monomers used in this embodiment include, but are not limited to, difunctional acrylate monomers such as 1,4-butanediol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, dipropylene glycol diacrylate, tripropylene glycol diacrylate, tetrapropylene glycol diacrylate, polypropylene glycol diacrylate, neopentyl glycol diacrylate, neopentyl glycol PO-modified diacrylate, neopentyl glycol hydroxypivalate ester diacrylate, neopentyl glycol hydroxypivalate ester caprolactone adduct diacrylate, 1,6-hexanediol bis(2-hydroxy-3-acryloyloxypropyl) ether, bis(4-acryloxypolyethoxyphenyl)propane, 1,9-nonanediol diacrylate, pentaerythritol diacrylate, pentaerythritol diacrylate monostearate, pentaerythritol diacrylate monobenzoate, bisphenol A diacrylate, EO-modified bisphenol A diacrylate, PO-modified bisphenol A diacrylate, bisphenol F diacrylate, EO-modified bisphenol F diacrylate, PO-modified bisphenol F diacrylate, EO-modified tetrabromobisphenol A diacrylate, tricyclodecanedimethanol diacrylate, isocyanuric acid EO-modified diacrylate, and 2-hydroxy-1,3-diacryloxypropane; trifunctional acrylate monomers such as glycerol PO-modified triacrylate, trimethylolpropane triacrylate, trimethylolpropane EO-modified triacrylate, trimethylolpropane PO-modified triacrylate, isocyanuric acid EO-modified triacrylate, isocyanuric acid EO-modified ε-caprolactone-modified triacrylate, 1,3,5-triacryloylhexahydro-s-triazine, pentaerythritol triacrylate, and dipentaerythritol triacrylate tripropionate; and acrylate monomers with four or more functional groups such as pentaerythritol tetraacrylate, dipentaerythritol tetraacrylate, dipentaerythritol pentaacrylate monopropionate, dipentaerythritol hexaacrylate, tetramethylolmethane tetraacrylate, oligoester tetraacrylate, and tris(acryloyloxy) phosphate. These may be used alone or in any combination of two or more.

The average number of functional groups per molecule of the polyfunctional (meth)acrylate used in this embodiment is preferably 2 or more, more preferably 2.5 or more, and even more preferably 3 or more. Having two or more functional groups per molecule enables a sufficient crosslinking degree in the cured film, resulting in good durability.

(Polyfunctional Thiol)

The polyfunctional thiol used in this embodiment has two or more mercapto groups within a single molecule. The polyfunctional thiol is used to impart good oxygen barrier properties to the cured film formed from the polyfunctional thiol and polyfunctional (meth)acrylate.

Examples of polyfunctional thiols used in this embodiment include, but are not limited to, ethylene glycol bis(3-mercaptopropionate), diethylene glycol bis(3-mercaptopropionate), tetraethylene glycol bis(3-mercaptopropionate), 1,2-propylene glycol bis(3-mercaptopropionate), diethylene glycol bis(3-mercaptobutyrate), 1,4-butanediol bis(3-mercaptopropionate), 1,4-butanediol bis(3-mercaptobutyrate), 1,8-octanediol bis(3-mercaptopropionate), 1,8-octanediol bis(3-mercaptobutyrate), hexanediol bis(thioglycolate), trimethylolpropane tris(3-mercaptopropionate), trimethylolpropane tris(3-mercaptobutyrate), trimethylolpropane tris(3-mercaptoisobutyrate), trimethylolpropane tris(thioglycolate), tris-[(3-mercaptopropionyloxy)-ethyl]-isocyanurate, 1,3,5-tris(3-mercaptobutyryloxyethyl)-1,3,5-triazine-2,4,6(1H,3H,5H)-trione, trimethylolethane tris(3-mercaptobutyrate), pentaerythritol tetrakis(3-mercaptopropionate), pentaerythritol tetrakis(3-mercaptobutyrate), pentaerythritol tetrakis(3-mercaptoisobutyrate), dipentaerythritol hexakis(3-mercaptopropionate), dipentaerythritol hexakis(3-mercaptobutyrate), dipentaerythritol hexakis(3-mercaptoisobutyrate), pentaerythritol tetrakis(thioglycolate), and dipentaerythritol hexakis(thioglycolate). These may be used alone or in any combination of two or more.

The average number of functional groups per molecule of the polyfunctional thiol used in this embodiment is preferably 2 or more, more preferably 2.5 or more, and even more preferably 3 or more. Having two or more functional groups per molecule enables a sufficient crosslinking degree in the cured film, resulting in good durability.

The ratio of the number of moles of (meth)acrylate groups in the polyfunctional (meth)acrylate (A) to the number of moles of mercapto groups in the polyfunctional thiol used in this embodiment (number of moles of acrylate groups/number of moles of mercapto groups) is preferably in the range of 0.6 or more and 9.0 or less, more preferably in the range of 0.8 or more and 5.5 or less, and even more preferably in the range of 1.0 or more and 2.5 or less. When the molar ratio of the mercapto groups to the (meth)acrylate groups is in the range of 0.6 to 9.0, preferably in the range of 0.8 to 5.5, a film with a high crosslink density is formed after the curing reaction, resulting in good durability. Alternatively, the ratio of the number of moles of (meth)acrylate groups in the polyfunctional (meth)acrylate to the number of moles of mercapto groups in the polyfunctional thiol used in this embodiment (number of moles of acrylate groups/number of moles of mercapto groups) is preferably in the range of 1.52 or more and 9.0 or less.

(Reaction Retarder)

The reaction retarder used in this embodiment is added to delay the reaction between the (meth)acrylate groups and the mercapto groups when the polyfunctional (meth)acrylate and the polyfunctional thiol are mixed, in order to achieve good pot life.

Examples of reaction retarders used in this embodiment include, but are not limited to, phenolic compounds, phosphorous acid compounds, and dithiocarbamate compounds. Among these, it is preferable to select at least one from phosphorous acid compounds and dithiocarbamate compounds to achieve good pot life with a small blending amount. Examples of phenolic compounds include, but are not limited to, 4-methoxyphenol and hydroquinone. Examples of phosphorous acid compounds include, but are not limited to, dimethyl phosphite, diethyl phosphite, dibutyl phosphite, diisopropyl phosphite, diisobutyl phosphite, diphenyl phosphite, dibenzyl phosphite, bis(2,2,2-trifluoroethyl) phosphite, trimethyl phosphite, triethyl phosphite, triisopropyl phosphite, tributyl phosphite, trihexyl phosphite, triethylhexyl phosphite, trioctyl phosphite, triisodecyl phosphite, trilauryl phosphite, triphenyl phosphite, and tri-o-tolyl phosphite. Examples of dithiocarbamate compounds include, but are not limited to, tetramethylthiuram disulfide, tetraethylthiuram disulfide, tetraisopropylthiuram disulfide, tetrabutylthiuram disulfide, tetramethylthiuram monosulfide, and dipentamethylenethiuram tetrasulfide. These may be used alone or in any combination of two or more.

In this embodiment, it is more preferable to use a dithiocarbamate compound as the reaction retarder.

The amount of reaction retarder used in this embodiment is preferably in the range of 0.0005% by mass or more and 1% by mass or less, more preferably in the range of 0.0005% by mass or more and 0.5% by mass or less, relative to 100% by mass of the total amount of the polyfunctional (meth)acrylate and the polyfunctional thiol. When the amount is 0.0005% by mass or more, a sufficient reaction retardation effect can be obtained, resulting in good pot life. Furthermore, when the amount added is 0.5% by mass or less, curing inhibition can be suppressed during the curing reaction when manufacturing a quantum dot-containing sheet, resulting in good durability.

(Scattering Agent)

In this embodiment, a scattering agent may be further contained. The scattering agent used in this embodiment can scatter the excitation light of the quantum dots to extend the optical path length, thereby efficiently increasing the light emission intensity of the quantum dots.

Examples of scattering agents used in this embodiment include organic scattering agents, inorganic scattering agents, and organic-inorganic hybrid scattering agents. Examples of organic scattering agents used in this embodiment include, but are not limited to, fine resin particles such as fine polystyrene particles, fine polymethyl methacrylate particles, fine polyurethane particles, fine polyethylene particles, fine polypropylene particles, fine melamine particles, and fine benzoguanamine particles. These may be used alone or in any combination of two or more. Furthermore, these particles are generally obtained by heterogeneous polymerization, such as suspension polymerization, and may be internally crosslinked or have functional groups such as acrylate groups on their surfaces.

Examples of inorganic scattering agents used in this embodiment include, but are not limited to, silica particles such as colloidal silica, fumed silica, and precipitated silica; inorganic oxides such as alumina particles, zirconia particles, titania particles, and zinc oxide particles; and talc, mica, kaolin, and clay. These may be used alone or in any combination of two or more. Furthermore, these may be surface-treated with a silane coupling agent or the like.

Examples of organic-inorganic hybrid scattering agents used in this embodiment include, but are not limited to, fine resin particles containing fine silica particles, fine resin particles encapsulating titania, and silica-modified resin particles. These may be used alone or in any combination of two or more.

The scattering agent used in this embodiment is preferably fine particles having at least one of a melamine structure and a benzoguanamine structure, because they provide high scattering efficiency due to their high refractive index, and high quantum yield due to their high transparency.

The amount of scattering agent used in this embodiment is preferably in the range of 0.05% by mass or more and 10% by mass or less, more preferably in the range of 0.1% by mass or more and 8% by mass or less, relative to 100% by mass of the total amount of the polyfunctional (meth)acrylate (A) and the polyfunctional thiol.

(Photoinitiator)

In this embodiment, it is preferable that a photoinitiator is further contained. The photoinitiator is used in this embodiment to efficiently promote the curing reaction by crosslinking polyfunctional (meth)acrylate and polyfunctional thiol. During the curing reaction, it is preferable to use active energy radiation such as ultraviolet (UV) light or electron beams, and more preferably UV light. The wavelength and irradiation dose of the active energy radiation can be set as appropriate. For example, UV light with a wavelength of 280 to 400 nm can be irradiated at 100 mJ/cm$^2$ to 5000 mJ/cm$^2$. Examples of light sources for generating UV light include known light sources such as low-pressure mercury lamps, high-pressure mercury lamps, metal halide lamps, and xenon lamps. These may be used alone or in any combination of two or more.

The photoinitiator used in this embodiment can be a known photoinitiator, and examples thereof include acetophenones such as diethoxyacetophenone, 2-hydroxy-1-phenylpropan-1-one, benzyl methyl ketal, 4-(2-hydroxyethoxy)phenyl-(2-hydroxy-2-propyl) ketone, 1-hydroxycyclohexylphenyl ketone, 2-methyl-1-[4-(methylthio)phenyl]-2-morpholinopropan-1-one, 2-benzyl-2-dimethylamino-1-(4-morpholinophenyl)butane, oligo{2-hydroxy-2-methyl-1-[4-(1-methylvinyl)phenyl]propanone}, and 2-hydroxy-1-(4-(4-(2-hydroxy-2-methylpropionyl)benzyl)phenyl)-2-methylpropan-1-one; benzoins such as benzoin, benzoin methyl ether, and benzoin ethyl ether; phosphines such as 2,4,6-trimethylbenzoyldiphenylphosphine oxide and bis(2,4,6-trimethylbenzoyl)phenylphosphine oxide; and phenylglyoxylic methyl esters. These may be used alone or in any combination of two or more.

The amount of photoinitiator used in this embodiment is preferably in the range of 0.05% by mass or more and 5% by mass or less, more preferably in the range of 0.1% by mass or more and 4% by mass or less, relative to 100% by mass of the total amount of the polyfunctional (meth)acrylate and the polyfunctional thiol.

In this embodiment, a photosensitizer may be used together with the photoinitiator to further enhance curability. The photosensitizer may be a known photosensitizer, and examples thereof include unsaturated ketones such as chalcone derivatives and dibenzalacetone; 1,2-diketones such as benzil and camphorquinone; polymethine dyes such as benzoin derivatives, fluorene derivatives, naphthoquinone derivatives, anthraquinone derivatives, xanthene derivatives, thioxanthene derivatives, xanthone derivatives, thioxanthone derivatives, coumarin derivatives, ketocoumarin derivatives, cyanine derivatives, merocyanine derivatives, and oxonol derivatives; acridine derivatives, azine derivatives, thiazine derivatives, oxazine derivatives, indoline derivatives, azulene derivatives, azulenium derivatives, squarylium derivatives, porphyrin derivatives, tetrapyrazinoporphyrazine derivatives, phthalocyanine derivatives, tetraazaporphyrazine derivatives, tetraquinoxalylporphyrazine derivatives, naphthalocyanine derivatives, subphthalocyanine derivatives, pyrylium derivatives, thiopyrylium derivatives, tetraphyrin derivatives, annulene derivatives, spiropyran derivatives, spirooxazine derivatives, thiospiropyran derivatives, metal arene complexes, organic ruthenium complexes, Michler's ketone derivatives, and biimidazole derivatives. These may be used alone or in any combination of two or more.

The amount of photosensitizer used in this embodiment is preferably in the range of 0.05% by mass or more and 5% by mass or less, relative to 100% by mass of the total amount of the polyfunctional (meth)acrylate and the polyfunctional thiol.

(Dispersion Resin)

In this embodiment, it is preferable that a dispersion resin is further contained. The dispersion resin is used in this embodiment to improve the compatibility of the quantum dots and scattering agent with polyfunctional (meth)acrylate and polyfunctional thiol. Improving compatibility makes it possible to suppress in-plane variation in the luminance of the cured film formed from the quantum dot-containing composition and also suppress the decrease in photoluminescence quantum yield caused by aggregation of quantum dots.

Examples of the dispersion resin used in this embodiment include, but are not limited to, acrylic resins, polyurethane resins, polyester resins, polyolefin resins, polycarbonate resins, polyethyleneimine resins, epoxy resins, and thioether resins. In particular, from the perspective of good compatibility with polyfunctional (meth)acrylates and polyfunctional thiols, the dispersion resin is preferably at least one selected from acrylic resins, polyurethane resins, polyester resins, and polyethyleneimine resins.

Acrylic resins used in this embodiment can be obtained by polymerizing monomers having unsaturated groups such as (meth)acrylate groups, vinyl groups, or allyl groups using a known polymerization method such as radical polymerization, living radical polymerization, anionic polymerization, or cationic polymerization.

Urethane resins used in this embodiment can be obtained by urethane reaction of a polyol and a polyisocyanate using a known method.

Polyester resins used in this embodiment can be obtained by esterifying a polybasic acid with a polyol using a known method, or by ring-opening polymerization of a cyclic ester compound such as caprolactone or butyrolactone using a known method.

Polyolefin resins can be obtained by polymerizing olefin monomers such as ethylene, propylene, butene, and isobutene using a known polymerization method such as coordination polymerization.

Polycarbonate resins can be obtained by subjecting a polyol and a polyfunctional carbonate such as diethyl carbonate to a carbonation reaction using a known method.

Polyethyleneimine resins can be obtained by ring-opening polymerization of aziridine compounds. It is also possible to use polyester resin-grafted polyethyleneimine resins obtained by, for example, reacting cyclic ester compounds with the amino groups formed after the reaction to cause ring-opening polymerization.

Epoxy resins can be obtained by ring-opening polymerization of compounds having two or more glycidyl groups using a known method.

Furthermore, from the perspective that adsorption to the quantum dots and scattering agent effectively achieves good compatibility, it is preferable that the dispersion resin has a polar functional group such as a carboxyl group, a sulfonic acid group, a phosphate group, an amino group, a mercapto group, or a hydroxyl group, and more preferably a phosphate group, an amino group, or a mercapto group. These groups are not only advantageous for achieving good compatibility but also for enhancing the light emission quantum efficiency of the quantum dots.

The amount of dispersion resin used in this embodiment is preferably in the range of 0.1% by mass or more and 5% by mass or less, more preferably in the range of 0.2% by mass or more and 4% by mass or less, relative to 100% by mass of the total amount of the polyfunctional (meth)acrylate and the polyfunctional thiol.

In this embodiment, a known organic solvent may be used as a dilution solvent for the quantum dots, as a reaction solvent during synthesis of the dispersion resin, or to adjust the viscosity of the quantum dot-containing composition for application thereof. The known organic solvent is preferably removed before the curing process described later.

Examples of solvents used in this embodiment include, but are not limited to, ester solvents such as ethyl acetate, propyl acetate, and butyl acetate; ketone solvents such as acetone, methyl ethyl ketone, and methyl isobutyl ketone; ether solvents such as dioxane and tetrahydrofuran; aliphatic hydrocarbon solvents such as n-hexane, cyclohexane, and methylcyclohexane; aromatic hydrocarbon solvents such as toluene and xylene; alcohol solvents such as methanol, ethanol, and isopropanol; amide solvents such as dimethylformamide; and water. These may be used alone or in any combination of two or more.

The quantum dot-containing composition described in detail above in this embodiment contains a polyfunctional (meth)acrylate, a polyfunctional thiol, a reaction retarder, and quantum dots, and further preferably contains at least one of a scattering agent, a photoinitiator, and a dispersion resin. The blending amount of each of these substances is as described above.

Furthermore, a preferred form of the quantum dot-containing composition in this embodiment includes a polyfunctional (meth)acrylate, a polyfunctional thiol, a reaction retarder, and quantum dots, wherein the reaction retarder includes a dithiocarbamate compound. Among dithiocarbamate compounds, the inclusion of tetraethylthiuram disulfide enables achieving a good pot life.

Another preferred form of the quantum dot-containing composition in this embodiment includes a polyfunctional (meth)acrylate, a polyfunctional thiol, a reaction retarder, a scattering agent, a photoinitiator, and quantum dots, wherein the ratio of the number of moles of the (meth)acrylate groups of the polyfunctional (meth)acrylate to the number of moles of the mercapto groups of the polyfunctional thiol is in the range of 0.8 or more and 5.5 or less, or the ratio of the number of moles of the (meth)acrylate groups of the polyfunctional (meth)acrylate to the number of moles of the mercapto groups of the polyfunctional thiol is in the range of 1.52 or more and 9.0 or less.

The quantum dot-containing composition used in this embodiment may further optionally use known additives depending on the application, within a range that does not impair the advantageous effects of the present embodiment. Examples of known additives include antioxidants, UV absorbers, antistatic agents, lubricants, surface modifiers, and viscosity modifiers. These may be used alone or in any combination of two or more.

<Quantum Dot-Containing Sheet Member>

As shown in Fig. 2, by curing the quantum dot-containing composition of this embodiment, for example, a quantum dot-containing sheet 1 containing quantum dots can be obtained. Here, "sheet" refers to a form in which the thickness is smaller than the plane dimensions, and may also be called a film.

Furthermore, as shown in Fig. 3, a quantum dot-containing sheet 1 with a laminated structure can be obtained by forming a quantum dot layer (ink layer) 3, on a substrate film 2, such as a plastic film, by curing the quantum dot-containing composition. The quantum dot-containing sheet 1 may have the quantum dot layer 3 formed on only one side of the substrate film 2. However, in a case where it is applied to a backlight device as described later, it is preferable for the quantum dot layer 3 to be in a film-like form, and, from the perspective of superior durability of the quantum dots (D), as shown in Fig. 4, it is preferable for the quantum dot-containing sheet 1 to have a laminated structure in which the substrate film 2 is bonded to both sides of the film-like quantum dot layer 3. When bonding the substrate film 2 and the quantum dot layer 3, they may be bonded using a known adhesive, or they may be bonded by using the quantum dot-containing composition itself as an adhesive and curing it.

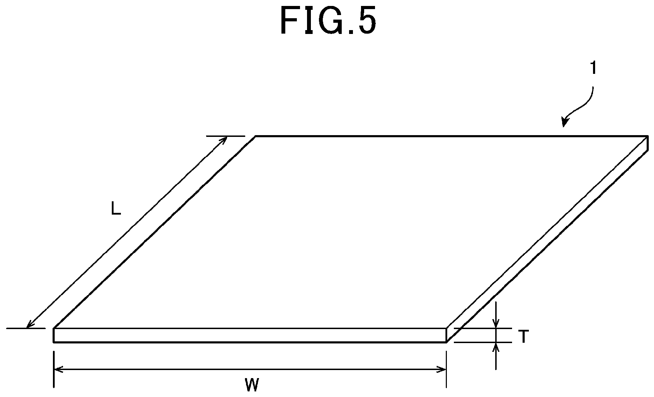

Fig. 5 shows an example schematic diagram of the quantum dot-containing sheet 1 used in this embodiment. In Fig. 5, the quantum dot-containing sheet 1 is formed as a thin plate (sheet, film) with a length dimension L, a width dimension W, and a thickness dimension T. The values of L, W, and T can be changed as appropriate depending on the application. The quantum dot-containing sheet 1 may have a uniform thickness, or it may have a thickness that varies locally, changes gradually along the length or width direction, or changes in steps.

Furthermore, since the quantum dot-containing sheet 1 used in this embodiment is formed by curing the quantum dot-containing composition, it is possible to effectively suppress the degradation over time and fading of the portions of the quantum dot layer located near the edges of the quantum dot-containing sheet 1 compared to conventional methods. The reasons for the degradation suppression achieved by this embodiment are considered to be the core-shell structure of the quantum dots, the improved durability and dispersibility of the quantum dots themselves due to the ligands, the fact that the resulting quantum dot layer is a cured film with a high crosslink density formed from a polyfunctional (meth)acrylate and a polyfunctional thiol, and the effective suppression of oxygen ingress by the polyfunctional thiol.

Examples of the substrate film 2 of the quantum dot-containing sheet 1 used in this embodiment include, but are not limited to, polyester, polypropylene, polyethylene, polystyrene, AS resin, ABS resin, acrylic resin, methacrylic resin, polyvinyl chloride, polyacetal, polyamide, polycarbonate, modified polyphenylene ether, polybutylene terephthalate, polyethylene terephthalate, polysulfone, polyethersulfone, polyphenylene sulfide, polyamideimide, polymethylpentene, liquid crystal polymer, epoxy resin, phenolic resin, urea resin, melamine resin, epoxy resin, diallyl phthalate resin, unsaturated polyester resin, polyimide, polyurethane, silicone resin, and styrene-based thermoplastic elastomer. These may be used alone or in any combination of two or more. Among these, polyester is preferred from the perspectives of light transmittance, thermal stability, dimensional stability, and adhesion between the substrate film 2 and the quantum dot layer 3, and polyethylene terephthalate is further preferred. To enhance the adhesion between the quantum dot layer 3 and the substrate film 2, the substrate surface (the surface that comes into contact with the quantum dot layer 3) may be subjected to a pretreatment such as plasma treatment, corona treatment, or ozone treatment. It is also possible to provide an adhesive layer (primer treatment) between the quantum dot layer 3 and the substrate film 2.

In this embodiment, the quantum dot layer thickness can be 50 $\mu$m or less, preferably 2 $\mu$m to 30 $\mu$m or less. The sheet thickness is measured, for example, using a micrometer, and is determined by averaging sheet thickness measurements taken at three or more points.

The surface (outer surface) of the substrate film of the quantum dot-containing sheet 1 used in this embodiment may be matted to efficiently introduce excitation light and extract light emission.

The total light transmittance of the quantum dot-containing sheet 1 used in this embodiment is preferably 55% or more, and more preferably 65% or more. The total light transmittance is determined by measurement according to the method specified in JIS K 7136:2000.

The haze value of the quantum dot-containing sheet 1 in this embodiment is preferably 85% or higher, more preferably 90% or higher, and even more preferably 95% or higher, since this allows efficient use of the excitation light. The haze value is determined by measurement according to the method specified in JIS K 7136:2000.

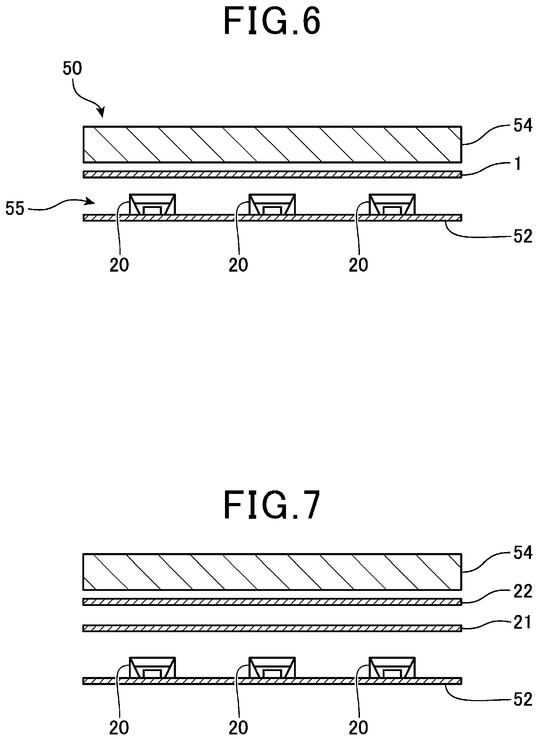

The quantum dot-containing sheet 1 of this embodiment can be incorporated, for example, into a backlight device 55 shown in Fig. 6. In Fig. 6, the backlight device 55 includes a plurality of light-emitting elements 20 (LEDs) and the quantum dot-containing sheet 1 of this embodiment facing the light-emitting elements 20. As shown in Fig. 6, each light-emitting element 20 is supported on the surface of a support 52. In Fig. 6, the backlight device 55 is located on the rear side of a display portion 54, such as a liquid crystal display, to form a display device 50.

Although not shown in Fig. 6, in addition to the quantum dot-containing sheet 1, a light diffusion plate and other sheets may be interposed between the light-emitting element 20 and the display portion 54.

Furthermore, although the quantum dot-containing sheet 1 shown in Fig. 6 is formed as a single sheet, for example, a plurality of quantum dot-containing sheets 1 may be joined together to achieve a certain size. A configuration in which a plurality of quantum dot-containing sheets 1 are joined together by tiling will be hereinafter referred to as a composite quantum dot-containing sheet.

A configuration is considered in which the quantum dot-containing sheet 1 in the display device 50 of Fig. 6 is replaced with a composite quantum dot-containing sheet, and a diffusion plate is placed between the light-emitting element 20 and the composite quantum dot-containing sheet. In other words, a configuration of light-emitting element 20/diffusion plate/composite quantum dot-containing sheet/display portion 54 is considered. In this configuration, light emitted from the light-emitting elements 20 and diffused by the diffusion plate enters the composite quantum dot-containing sheet. Since light that has been diffused by the diffusion plate enters the composite quantum dot-containing sheet, the light intensity distribution due to the distance from the light-emitting elements 20 can be suppressed. Furthermore, compared to a configuration without a diffusion plate, the distance between the light-emitting elements 20 and the composite quantum dot-containing sheet increases. As a result, the effect of heat generated by the light-emitting elements 20 on the quantum dots contained within the composite sheet is reduced.

On the other hand, as shown in Fig. 7, it is also possible to arrange the components in the order of light-emitting element 20/quantum dot-containing sheet 21/diffusion plate 22/display portion 54. With this configuration, even if light of uneven color is emitted at the joints of quantum dot-containing sheets 1 due to diffuse reflection or quantum dot degradation caused by water vapor entering through the joints, it is possible to appropriately prevent the display portion 54 from displaying images with uneven color. That is, since light emitted from the quantum dot-containing sheet 21 is diffused by the diffusion plate 22 before entering the display portion 54, color unevenness in the display of the display portion 54 can be suppressed.

When the quantum dot-containing sheet 21 is used, regardless of whether it is applied to the display device shown in Fig. 7 or to other use cases, it is preferable to place a diffusion plate on the light-emitting surface side of the quantum dot-containing sheet 21.

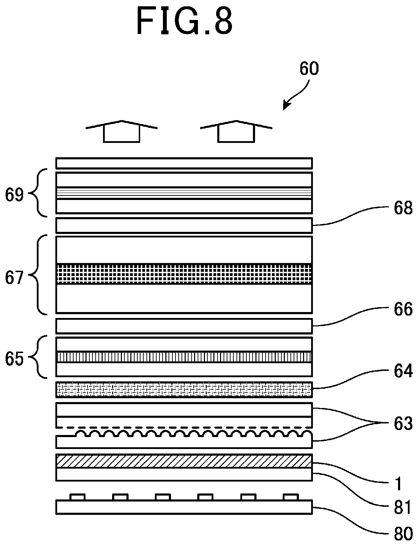

As shown in Fig. 8, the quantum dot-containing sheet 1 of this embodiment can be incorporated into a liquid crystal display element 60. For example, the liquid crystal display element 60 includes a direct-type LED sheet 80, a partially reflective sheet (partially reflective layer) 81, a prism sheet 63, a diffusion sheet 64, a polarizing plate 65, a phase difference film 66, a liquid crystal cell 67 including a glass substrate/liquid crystal/color filter, etc., a phase difference film 68, and a polarizing plate 69, laminated in this order from the bottom in the diagram. A dichroic filter (e.g., "BLT" manufactured by 3M) can be used for the partially reflective sheet. The quantum dot-containing sheet 1 is provided on a surface of the partially reflective sheet 81. The quantum dot-containing sheet 1 may be coated onto the surface of the partially reflective sheet 81. Alternatively, the quantum dot-containing sheet 1 may be a sheet material bonded to the surface of the partially reflective sheet 81.

Fig. 8 shows a direct type with a plurality of LEDs arranged directly below, which is used for large displays and other purposes.

The LEDs emit blue light. Therefore, a portion of the blue light transmits through the partially reflective sheet 81 and undergoes wavelength conversion to red and/or green light in the quantum dot-containing sheet 1. The wavelength-converted red and green light is directed upward by the partially reflective sheet 81 instead of downward.

When blue LEDs are used, in a configuration without the partially reflective sheet 81, color unevenness and luminance unevenness (halo phenomenon) tend to occur due to diffusion, diffuse reflection, and the like when the blue light is wavelength-converted in the quantum dot-containing sheet 1. Providing the partially reflective sheet 81 as in this embodiment enables suppressing the halo phenomenon. This is particularly effective in direct-type configurations having an increased number of LEDs, as shown in Fig. 8. Furthermore, by reducing the transmission of blue light with the partially reflective sheet 81, the amount of blue light reused can be increased, thereby improving luminance (light emission intensity). This enables achieving a high luminance without including regulated heavy metals, such as Cd and Pb, in the quantum dots.

The quantum dot-containing sheet 1 used in this embodiment can effectively suppress changes in light emission intensity over time compared to conventional techniques. Therefore, the backlight device 55, liquid crystal display elements, and the like obtained using the quantum dot-containing sheet 1 of this embodiment can have stable wavelength conversion characteristics, enabling the extension of the life of the backlight device 55 and liquid crystal display elements.

The quantum dot-containing sheet 1 used in this embodiment can be formed into a flexible sheet. Therefore, the quantum dot-containing sheet 1 can be appropriately installed on curved surfaces, etc.

The quantum dot-containing sheet 1 used in this embodiment can, for example, ensure a normalized illuminance of 0.6 or higher after a 1000-hour durability test. Preferably, it can maintain a normalized illuminance of 0.75 or higher, more preferably 0.85 or higher; and even more preferably 0.9 or higher.

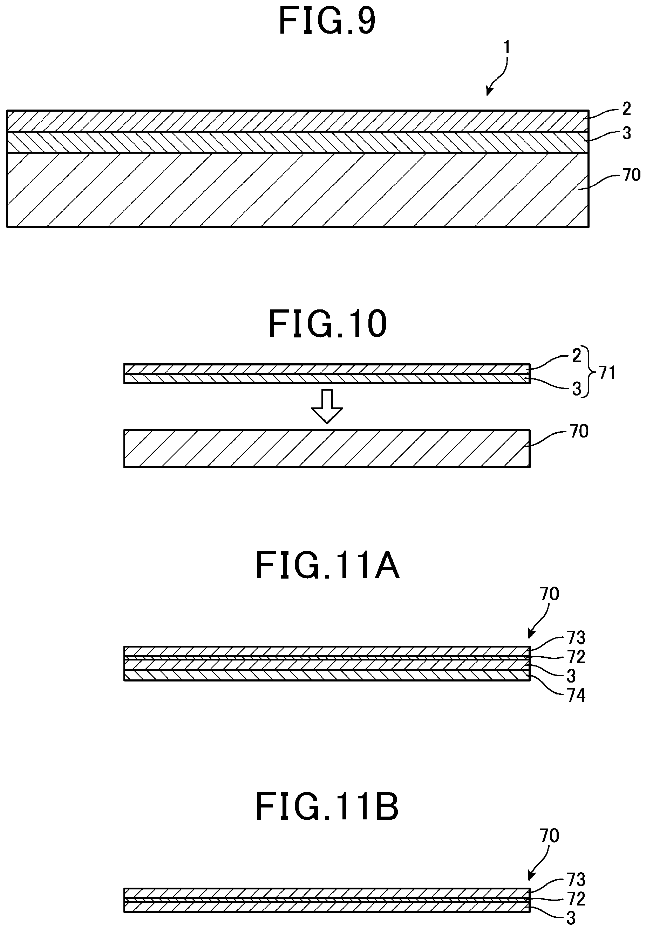

Furthermore, as shown in Fig. 9, the quantum dot-containing sheet 1 of this embodiment may have a structure where the substrate film 2 is provided only on one side of the quantum dot layer 3, and an optical member 70 is in contact with the side of the quantum dot layer 3 opposite the substrate film 2. This allows one side of the quantum dot layer 3 to be protected by the substrate film 2 while allowing the optical member 70 to be closely adhered to the opposite side of the quantum dot layer 3. The optical member 70 may preferably be a light guide plate or a diffusion plate. This quantum dot-containing sheet 1 can be applied to backlight devices, display devices, and lighting devices.

Note that the quantum dot-containing sheet 1 shown in Fig. 9 can form a laminated structure of optical member/quantum dot layer/substrate film by, for example, directly coating the surface of the optical member 70 with the quantum dot-containing composition of this embodiment, placing the substrate film 2 over it, and then thermally curing the composition.

For example, as shown in Fig. 10, when the substrate film 2 is provided only on one side of the quantum dot layer 3, the surface of a quantum dot-containing sheet 71 without the substrate film 2 faces the optical component 70 so that the quantum dot-containing sheet 71 and the optical component 70 are closely adhered to each other. The quantum dot-containing sheet 71 and the optical component 70 may be bonded via an adhesive layer, or the quantum dot-containing sheet 71 may be directly closely adhered to the surface of the optical component 70.

As shown in Fig. 11A, the quantum dot-containing sheet 71 includes, for example, a first substrate film 73 bonded to one surface of the quantum dot layer 3 via a primer layer 72, and a second substrate film 74 directly bonded to the surface of the quantum dot layer 3 opposite the first substrate film 73. This allows both surfaces of the quantum dot layer 3 to be protected by the respective substrate films 73 and 74. For example, the substrate films 73 and 74 can be formed from PET film. Alternatively, the first substrate film 73 may be a PET film and the second substrate film 74 may be a PE film. Alternatively, PEN (polyethylene naphthalate) film may be used instead of PET or PE film.

In the quantum dot-containing sheet 71, the adhesion between the first substrate film 73 and the quantum dot layer 3 is stronger than that between the second substrate film 74 and the quantum dot layer 3. Then, as shown in Fig. 10, the process of bonding the quantum dot-containing sheet 71 to the surface of the optical component 70 may include peeling off the second substrate film 74 of the quantum dot-containing sheet 71 and bonding the thus-exposed surface of the quantum dot layer 3 to the surface of the optical component 70, thereby producing the quantum dot-containing sheet 1 shown in Fig. 9.

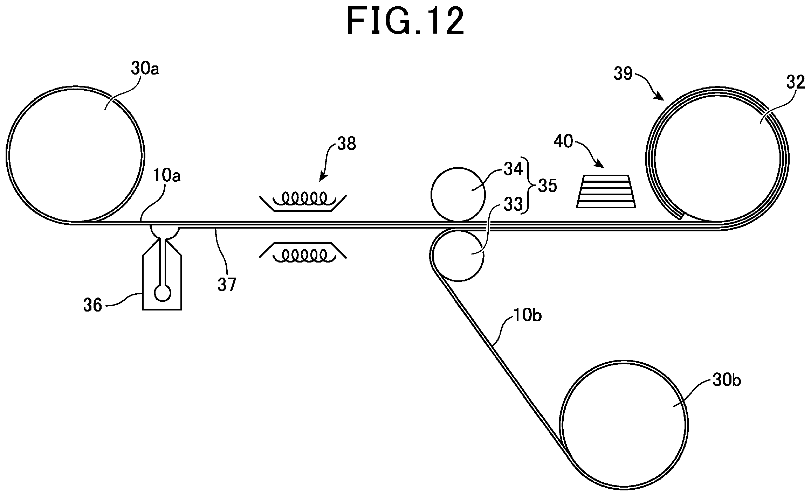

Fig. 12 shows a conceptual diagram of a manufacturing device for manufacturing the quantum dot-containing sheet 1 of this embodiment. Fig. 12 discloses an example of a method for manufacturing the quantum dot-containing sheet 1 shown in Fig. 4, including coating and curing the quantum dot-containing composition onto the substrate film 2 to form the quantum dot layer 3.

As shown in Fig. 12, the device includes a first master roll 30a for feeding a resin film 10a serving as the substrate film 2, a second master roll 30b for feeding a resin film 10b serving as the substrate film 2, a take-up roll 32, a joining portion 35 formed by a pair of nip rolls 33, 34, a coating means 36, a drying portion 38, and a curing reaction portion 41.

As shown in Fig. 12, the resin film 10a is fed from first master roll 30a, and a quantum dot-containing composition 37 containing quantum dots is applied to the surface of the resin film 10a using the coating means 36. Examples of methods for coating the quantum dot-containing composition 37 include methods using known coaters or impregnation coaters. For example, gravure coaters, curtain coaters, dip coaters, comma knife coaters, die coaters, and roll coaters can be used.

As shown in Fig. 12, the resin film 10a, with its surface coated with the quantum dot-containing composition 37, is heated by the drying portion 38 having a heating device such as a heater or hot air oven to cause the contained solvent to volatilize. If the quantum dot-containing composition 37 does not contain a solvent, the drying portion 38 may be omitted.

Next, the quantum dot-containing composition 37 applied to the resin film 10a and the resin film 10b fed from the second master roll 30b are joined together at their interface by a pressing device in the joining portion 35. During the joining, heat may be applied as necessary. If the configuration does not include the quantum dot layer 3 between the resin films 10a and 10b, the above joining operation can be omitted.

Next, the quantum dot layer 3 is cured by irradiating it with active energy radiation by the curing reaction portion 40 including an active energy ray radiation device, such as an UV irradiation device or an electron beam irradiation device (see Fig. 4). The active energy radiation may be performed either before or after the joining process by the joining portion 35.

Then, a sheet-like quantum dot-containing sheet 39 including the resin film 10a/quantum dot layer 3/resin film 10b is wound onto the take-up roll 32. By cutting the wound quantum dot-containing sheet 39 to a predetermined size, a quantum dot-containing sheet 1 of the predetermined shape shown in Fig. 4 can be obtained. The quantum dot-containing composition 37 of this embodiment has a good pot life, enabling mass production of the quantum dot-containing sheet 39.

Furthermore, to fully complete the curing reaction for the quantum dot-containing sheet 1 of this embodiment, it can be aged at an appropriate aging temperature for an appropriate duration. For example, the appropriate aging temperature is preferably in the range of 20 to 60°C, and more preferably in the range of 30 to 50°C, but is not limited thereto. The appropriate aging time is preferably in the range of 6 to 48 hours, and more preferably in the range of 10 to 24 hours.

The average thickness of the quantum dot layer 3 in the quantum dot-containing sheet 1 of this embodiment is preferably in the range of 70 μm or less, more preferably 50 μm or less, and even more preferably 2 μm to 30 μm, but is not limited thereto. The average thickness of the quantum dot layer 3 in the quantum dot-containing sheet 1 is calculated, for example, by subtracting the average thickness of the substrate film 2 from the average of thickness measurements of the quantum dot-containing sheet 1 taken at three or more points using a micrometer.

Using the manufacturing device shown in Fig. 12, it is also possible to manufacture a quantum dot-containing sheet 71 as shown in Fig. 11A in which the primer layer 72 is provided on only one side of the quantum dot layer 3 to vary the adhesion force between the quantum dot layer 3 and the substrate film 73.

Furthermore, using the manufacturing device shown in Fig. 12, it is also possible to manufacture a quantum dot-containing film member in which the substrate film is provided only on one side of the quantum dot layer. In this case, the second master roll 30b and the nip rolls 33, 34 are not required.

Examples

The advantageous effects of the present invention will be described below through examples and comparative examples. The present invention is not limited to the following examples.

<Quantum Dot Experiment>

In this example, I-III-VI chalcopyrite quantum dots containing no RoHS regulated substances were prepared as cadmium-free quantum dots. Specifically, Ag-Ga-S quantum dots were prepared. Commercially available InP was used as a comparative example.

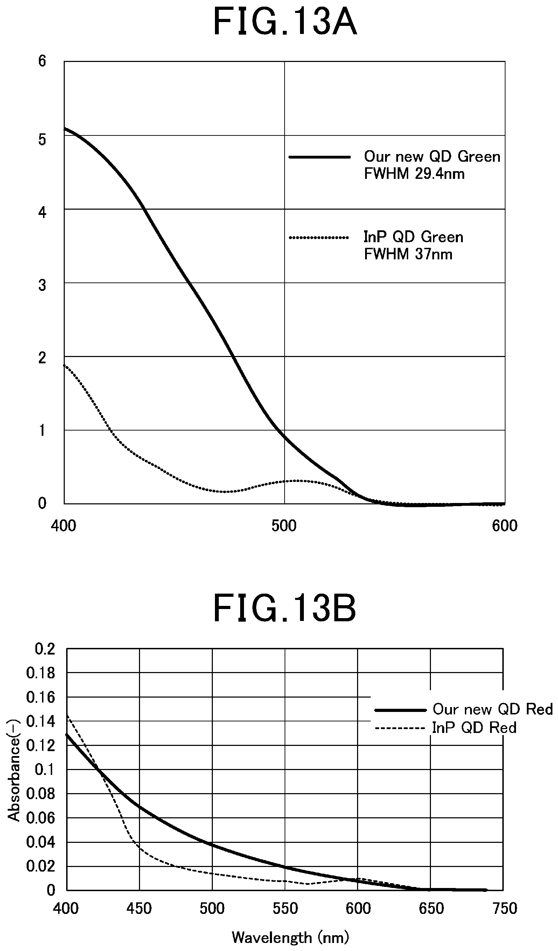

The plot shown in Fig. 13A presents the experimental results for green quantum dots, with the horizontal axis representing wavelength and the vertical axis representing the absorption coefficient. As shown in Fig. 13A, the chalcopyrite quantum dots of this example were found to have a higher absorption coefficient at 450 nm compared to InP. The absorption coefficient at 450 nm of the present example was approximately 5 times or more higher, preferably approximately 6 times or more higher, and more preferably approximately 7 times or more higher than that of the comparative example (in the experiment, it was approximately 6 times or more higher, preferably approximately 7 times or more higher).

The plot shown in Fig. 13B presents the experimental results for red quantum dots, with the horizontal axis representing wavelength and the vertical axis representing the absorption coefficient. As shown in Fig. 13B, the chalcopyrite quantum dots of this example were found to have a higher absorption coefficient at 450 nm compared to InP. The absorption coefficient at 450 nm of the present example was approximately 1.5 times or more higher, and preferably approximately 2 times or more higher than that of the comparative example.

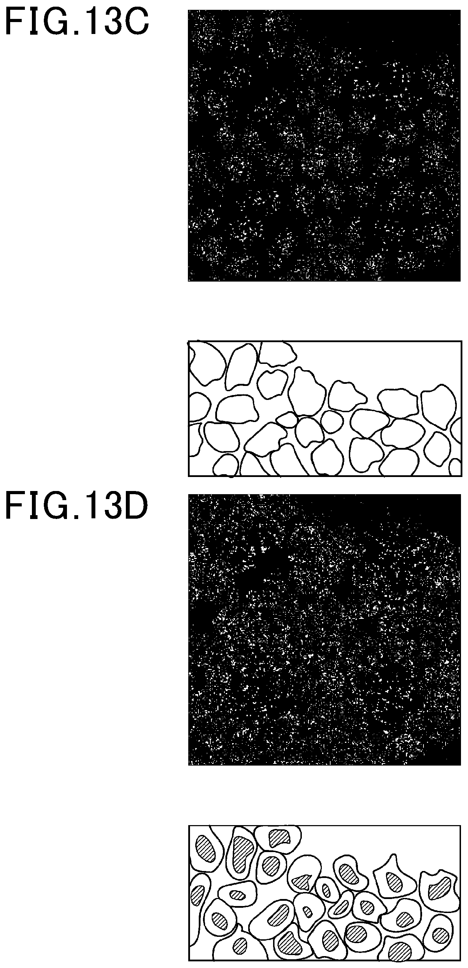

The upper part of Fig. 13C shows the EDX mapping of Ag and Ga in the quantum dots of this example, and the lower part is a schematic diagram showing a portion thereof.

The more Ag and Ga are detected, the deeper the blue color. The result indicates that Ag and Ga are primarily present in the core of the quantum dots.

The upper part of Fig. 13D shows the EDX mapping of Zn and S in the quantum dots of this example, and the lower part is a schematic diagram showing a portion thereof.

The more Zn and S are detected, the deeper the yellow color. The result indicates that Zn and S are primarily present in the shell of the quantum dots.

Next, the following quantum dot-containing compositions were formed. First, methods for measuring various physical property values will be described.

<Measurement of Number-Average Molecular Weight>

The number-average molecular weight was measured by gel permeation chromatography (GPC) using dispersion resins as specimens. For specimens soluble in tetrahydrofuran, tetrahydrofuran was used as the eluent. Measurements were performed using an HLC-8220 GPC system, manufactured by Tosoh Corporation, in which two TSKgel superHZM-N columns were connected, with the column temperature set at 40°C and the flow rate set at 0.35 ml/min. Each sample was prepared by dissolving 2 mg of the specimen in 5 ml of the above eluent. The number-average molecular weight was calculated based on standard polystyrene equivalents. Note that the number-average molecular weight was not calculated for specimens that were insoluble in the eluent or could not be measured due to adsorption to the column.

<Quantum Yield Measurement>

Using quantum dots and quantum dot-containing sheets as specimens, the photoluminescence quantum yield was measured by an absolute PL quantum yield measurement device (Quantaurus-QY C11347-01, manufactured by Hamamatsu Photonics K.K.) with an excitation wavelength of 450 nm. For the quantum dots, a toluene solution was prepared such that the absorbance at 450 nm was 1 when using a 1 cm cell, and this solution was used as the specimen.

<Measurement of Light Emission Peak Wavelength and FWHM>

Using the quantum dots as specimens, the peak wavelength and FWHM of the light emission were measured by a spectrofluorometer (FP-8500, manufactured by JASCO Corporation) with an excitation wavelength of 450 nm. For the quantum dots, a toluene solution was prepared such that the absorbance at 450 nm was 1 when using a 1 cm cell, and this solution was used as the specimen.

<Viscosity Measurement>

Using the quantum dot-containing compositions described below as specimens, viscosity measurement was performed at 25°C with a B-type viscometer (TVB-10M, manufactured by Toki Sangyo Co., Ltd.).

<Film Thickness Measurement>

For the quantum dot-containing sheets obtained as described below, the thickness was determined by averaging measurements taken at three or more points using a micrometer (a high-precision digimatic micrometer, MDH-25MB, manufactured by Mitutoyo Corporation).

<Measurement of Total Light Transmittance and Haze>

Each of the quantum dot-containing sheets obtained as described below was cut into a specimen of 50 mm width and 50 mm length. The total light transmittance and haze value were measured three times using a spectrophotometric haze meter (SH7000, manufactured by Nippon Denshoku Industries Co., Ltd.) in accordance with the measurement method specified in JIS K 7136:2000. Then, the three total light transmittance measurements and the three haze measurements were averaged.

<Quantum Dots>

In the experiment, powdered quantum dots with a light emission peak wavelength of 530 nm (green), a FWHM of 30 nm, and a photoluminescence quantum yield of 90% in toluene solution were used (hereinafter referred to as green quantum dots). In addition, powdered quantum dots with a light emission peak wavelength of 630 nm (red), a FWHM of 30 nm, and a photoluminescence quantum yield of 90% in toluene solution were used (hereinafter referred to as red quantum dots). Both are I-III-VI chalcopyrite compounds and exhibit a higher absorption coefficient at 450 nm than InP.

<Manufacturing of Dispersion Resins>

Dispersion resins (G-1) to (G-6) were prepared according to the methods described below. Table 1 shows the materials used in the preparation and their blending amounts, and the properties of the resulting dispersion resins.

<Manufacturing Example (1)>

While introducing nitrogen gas, 25.8 parts of toluene, 56.6 parts of n-butyl methacrylate (manufactured by Tokyo Chemical Industry Co., Ltd.), and 3.5 parts of pentaerythritol tetrakis(3-mercaptopropionate) (manufactured by Tokyo Chemical Industry Co., Ltd.) were charged into a reaction vessel provided with a stirrer, thermometer, reflux condenser, dropping tube, and nitrogen inlet tube, and stirred at room temperature for 30 minutes. Next, after raising the temperature to 90°C, a solution of 0.02 parts 2,2'-azobis(isobutyronitrile) dissolved in 2.5 parts toluene was added dropwise over 6 hours. The mixture was then stirred for an additional 3 hours at 90°C to cause the polymerization reaction. After cooling the mixture to room temperature, the reaction solution was removed and the solvent was removed by vacuum drying to obtain a solid dispersion resin (G-1). Note that "parts" refers to "parts by mass." The same applies to the following experiments.
The dispersion resin (G-1) thus obtained was an acrylic resin having a mercapto group with a number-average molecular weight of 2500.

<Manufacturing Example (2)>

While introducing nitrogen gas, 25.7 parts of toluene, 28.9 parts of n-butyl methacrylate (Tokyo Chemical Industry Co., Ltd.), 28.9 parts of 2-ethylhexyl methacrylate, and 2.1 parts of pentaerythritol tetrakis(3-mercaptopropionate) (Tokyo Chemical Industry Co., Ltd.) were charged into a reaction vessel provided with a stirrer, thermometer, reflux condenser, dropping tube, and nitrogen inlet tube, and stirred at room temperature for 30 minutes. Next, after raising the temperature to 90°C, a solution of 0.02 parts 2,2'-azobis(isobutyronitrile) dissolved in 2.5 parts toluene was added dropwise over 6 hours. The mixture was then stirred for an additional 3 hours at 90°C to cause the polymerization reaction. After cooling the mixture to room temperature, the reaction solution was removed and the solvent was removed by vacuum drying to obtain a viscous liquid dispersion resin (G-2).
The dispersion resin (G-2) thus obtained was an acrylic resin having a mercapto group with a number-average molecular weight of 3300.

<Manufacturing Example (3)>

Into a reaction vessel provided with a stirrer, thermometer, reflux condenser, nitrogen inlet tube, and vacuum piping, 86.9 parts of pentaerythritol tetrakis(3-mercaptopropionate) (manufactured by Tokyo Chemical Industry Co., Ltd.) were charged. The pressure in the reaction vessel was reduced using a vacuum pump while stirring the mixture for 30 minutes. Subsequently, 13.0 parts of tris(2-acryloyloxyethyl) isocyanurate (manufactured by Tokyo Chemical Industry Co., Ltd.) heated to 60°C while stirring was added. After stirring the mixture until homogeneous, 0.1 part of triethylamine was added, and the mixture was stirred for 3 hours to cause reaction and obtain a viscous liquid dispersion resin (G-3).
The dispersion resin (G-3) thus obtained was a thioether resin having a mercapto group with a number-average molecular weight of 2100.

<Manufacturing Example (4)>

As the dispersion resin (G-4), SOLSPERSE (registered trademark) 24000GR (a polyethyleneimine resin having amino groups, manufactured by Lubrizol Corporation) was used.

<Manufacturing Example (5)>

As the dispersion resin (G-5), AJISPER (registered trademark) PB821 (a polyester resin having amino groups, manufactured by Ajinomoto Fine-Techno Co., Inc.) was used.

<Manufacturing Example (6)>

As the dispersion resin (G-6), DISPERBYK (registered trademark)-111 (a polyester resin having phosphate groups, manufactured by BYK Japan KK) was used.

[Table 1]

| Manufacturing example | Manufacturing Example (1) | Manufacturing Example (2) | Manufacturing Example (3) | Manufacturing Example (4) | Manufacturing Example (5) | Manufacturing Example (6) |
|---|---|---|---|---|---|---|
| Dispersion resin (G) | G-1 | G-2 | G-3 | G-4 | G-5 | G-6 |
| Product name | - | - | - | SOLSPERSE 24000GR | AJISPER PB821 | DISPERBYK -111 |
| Functional group | Mercapto group | Mercapto group | Mercapto group | Amino group | Amino group | Phosphoric acid group |
| Type of resin | Acrylic | Acrylic | Thioether | Polyethyleneimine | Polyester | Polyester |
| Number-average molecular weight | 2,500 | 3,300 | 2,100 | - | - | - |

<Manufacturing of Quantum Dot-Containing Compositions>

Quantum dot-containing compositions (X-1) to (X-21) were prepared according to the methods described below. Tables 2 and 3 show the blending amounts of materials used in the preparation and the results of pot life evaluation described below.

<Experimental Example 1>

A mixture of 60 parts of A-DCP (a dimethylol-tricyclodecane diacrylate, (meth)acrylate group content: 6.58 mmol/g, manufactured by Shin-Nakamura Chemical Co., Ltd.) as the polyfunctional (meth)acrylate (A), 40 parts of EGMP-4 (a tetraethylene glycol bis(3-mercaptopropionate), mercapto group content: 5.38 mmol/g, manufactured by SC Organic Chemical Co., Ltd.) as the polyfunctional thiol (B), 1 part of hydroquinone (manufactured by Tokyo Chemical Industry Co., Ltd.) as the reaction retarder (C), 0.4 parts of green quantum dots and 0.07 parts of red quantum dots as the quantum dots (D), 5 parts of Eposter (registered trademark) MS (benzoguanamine-formaldehyde condensate particles, manufactured by Nippon Shokubai Co., Ltd.) as the scattering agent (E), 0.3 parts of Irgacure (registered trademark) 184 (manufactured by BASF) as the photoinitiator (F), and 1.37 parts of the dispersion resin (G-1) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-1) was 1.84.

<Experimental Example 2>

A mixture of 50 parts of A-TMPT (a trimethylolpropane triacrylate, (meth)acrylate group content: 10.0 mmol/g, manufactured by Shin-Nakamura Chemical Co., Ltd.) as the polyfunctional (meth)acrylate (A), 5 parts of Shikou UV-7650B (a urethane acrylate resin, acrylate group content: 0.0004 parts, manufactured by Nippon Gohsei Co., Ltd.), 45 parts of TMMP (a trimethylolpropane tris(3-mercaptopropionate), mercapto group content: 7.53 mmol/g, manufactured by SC Organic Chemical Co., Ltd.) as the polyfunctional thiol (B), 0.5 parts of triphenyl phosphite (manufactured by Tokyo Chemical Industry Co., Ltd.) as the reaction retarder (C), 0.4 parts of green quantum dots and 0.07 parts of red quantum dots as the quantum dots (D), 5 parts of Eposter MS (benzoguanamine-formaldehyde condensate particles, manufactured by Nippon Shokubai Co., Ltd.) as the scattering agent (E), and 0.6 parts of Irgacure 184 (manufactured by BASF) as the photoinitiator (F) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-2) was 1.48.

<Experimental Example 3>

A mixture of 20 parts of A-TMPT (a trimethylolpropane triacrylate, (meth)acrylate group content: 10.0 mmol/g, manufactured by Shin-Nakamura Chemical Co., Ltd.) and 30 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 50 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Techpolymer (registered trademark) MBX-5 (crosslinked polymethyl methacrylate particles, manufactured by Sekisui Kasei Co., Ltd.) as the scattering agent (E), 0.2 parts of Irgacure 184 (manufactured by BASF) as the photoinitiator (F), and 1.37 parts of the dispersion resin (G-4) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-3) was 1.12.

<Experimental Example 4>

A mixture of 45 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) and 15 parts of DPMP (a dipentaerythritol hexakis(3-mercaptopropionate), mercapto group content: 7.66 mmol/g, manufactured by SC Organic Chemical Co., Ltd.) as the polyfunctional thiol (B), 0.3 parts of triphenyl phosphite (manufactured by Tokyo Chemical Industry Co., Ltd.) as the reaction retarder (C), 0.4 parts of green quantum dots and 0.07 parts of red quantum dots as the quantum dots (D), 0.25 parts of D-918 (rutile titanium oxide, manufactured by Sakai Chemical Industry Co., Ltd.) and 4 parts of Optbeads (registered trademark) 2000M (melamine resin-silica composite particles, manufactured by Nissan Chemical Corporation) as the scattering agent (E), 0.3 parts of Irgacure TPO (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of acrylate groups in the polyfunctional (meth)acrylate (A) to mercapto groups in the polyfunctional thiol (B) in the resulting quantum dot-containing composition (X-4) was 0.87.

<Experimental Example 5>

A mixture of 80 parts of A-TMPT (a trimethylolpropane triacrylate, (meth)acrylate group content: 10.0 mmol/g, manufactured by Shin-Nakamura Chemical Co., Ltd.) as the polyfunctional (meth)acrylate (A), 20 parts of TMMP (a trimethylolpropane tris(3-mercaptopropionate), mercapto group content: 7.53 mmol/g, manufactured by SC Organic Chemical Co., Ltd.) as the polyfunctional thiol (B), 0.001 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 0.2 parts of D-918 (rutile titanium oxide, manufactured by Sakai Chemical Industry Co., Ltd.) and 6 parts of Optbeads 2000M (melamine resin-silica composite particles, manufactured by Nissan Chemical Corporation) as the scattering agent (E), 0.8 parts of Irgacure TPO (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-5) was 5.31.

<Experimental Example 6>

A mixture of 50 parts of A-TMPT (a trimethylolpropane triacrylate, (meth)acrylate group content: 10.0 mmol/g, manufactured by Shin-Nakamura Chemical Co., Ltd.) and 5 parts of A-DPH (a dipentaerythritol hexaacrylate, (meth) acrylate group content: 0.010 mmol/g, manufactured by Shin-Nakamura Chemical Co., Ltd.) as the polyfunctional (meth) acrylate (A), 35 parts of PEMP (a pentaerythritol tetrakis(3-mercaptopropionate), mercapto group content: 8.19 mmol/g, manufactured by SC Organic Chemical Co., Ltd.) and 10 parts of DPMP (a dipentaerythritol hexakis(3-mercaptopropionate), mercapto group content: 7.66 mmol/g, manufactured by SC Organic Chemical Co., Ltd.) as the polyfunctional thiol (B), 0.3 parts of triphenyl phosphite (manufactured by Tokyo Chemical Industry Co., Ltd.) as the reaction retarder (C), 0.4 parts of green quantum dots and 0.07 parts of red quantum dots as the quantum dots (D), 7 parts of Epostar MS (benzoguanamine-formaldehyde condensate particles, manufactured by Nippon Shokubai Co., Ltd.) as the scattering agent (E), 0.8 parts of Irgacure 184 (manufactured by BASF) as the photoinitiator (F), and 1.37 parts of the dispersion resin (G-3) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-6) was 1.52.

<Experimental Example 7>

A mixture of 50 parts of A-TMPT (a trimethylolpropane triacrylate, (meth)acrylate group content: 10.0 mmol/g, manufactured by Shin-Nakamura Chemical Co., Ltd.) and 15 parts of AD-TMP (a trimethylolpropane triacrylate, (meth) acrylate group content: 10.0 mmol/g, manufactured by Shin-Nakamura Chemical Co., Ltd.) as the polyfunctional (meth) acrylate (A), 35 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 1.0 part of D-918 (rutile titanium oxide, manufactured by Sakai Chemical Industry Co., Ltd.) as the scattering agent (E), 0.4 parts of Irgacure 184 (manufactured by BASF) as the photopolymerization initiator (F), and 1.0 part of the dispersion resin (G-1) and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-7) was 2.19.

<Experimental Example 8>

A mixture of 40 parts of A-TMPT (a trimethylolpropane triacrylate, (meth)acrylate group content: 10.0 mmol/g, manufactured by Shin-Nakamura Chemical Co., Ltd.) and 15 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 45 parts of Karenz (registered trademark) MT PE1 (a pentaerythritol tetrakis(3-mercaptobutyrate), mercapto group content: 7.34 mmol/g, manufactured by Showa Denko K.K.) as the polyfunctional thiol (B), 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.3 parts of Irgacure 184 (manufactured by BASF) as the photopolymerization initiator (F), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-8) was 1.60.

<Experimental Example 9>

A mixture of 50 parts of A-TMPT (a trimethylolpropane triacrylate, (meth)acrylate group content: 10.0 mmol/g, manufactured by Shin-Nakamura Chemical Co., Ltd.) and 10 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.003 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 0.2 parts of D-918 (rutile titanium oxide, manufactured by Sakai Chemical Industry Co., Ltd.) and 4.5 parts of Optbeads 2000M (melamine resin-silica composite particles, manufactured by Nissan Chemical Corporation) as the scattering agent (E), 0.2 parts of Irgacure 184 (manufactured by BASF) and 0.1 parts of Irgacure TPO as the photopolymerization initiator (F), and 1.37 parts of the dispersion resin (G-4) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-9) was 1.79.

<Experimental Example 10>

A mixture of 50 parts of A-TMPT (a trimethylolpropane triacrylate, (meth)acrylate group content: 10.0 mmol/g, manufactured by Shin-Nakamura Chemical Co., Ltd.) and 10 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.003 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 0.2 parts of D-918 (rutile titanium oxide, manufactured by Sakai Chemical Industry Co., Ltd.) and 4.5 parts of Optbeads 2000M (melamine resin-silica composite particles, manufactured by Nissan Chemical Corporation) as the scattering agent (E), 0.2 parts of Irgacure 184 (manufactured by BASF) and 0.1 parts of Irgacure TPO as the photopolymerization initiator (F), and 1.37 parts of the dispersion resin (G-5) as the dispersion resin (G) was prepared. After gently shaking the mixture by hand, it was stirred until homogeneous using a homodisper. The molar ratio of acrylate groups in the polyfunctional (meth)acrylate (A) to mercapto groups in the polyfunctional thiol (B) in the resulting quantum dot-containing composition (X-10) was 1.79.

<Experimental Example 11>

A mixture of 50 parts of A-TMPT (a trimethylolpropane triacrylate, (meth)acrylate group content: 10.0 mmol/g, manufactured by Shin-Nakamura Chemical Co., Ltd.) and 10 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 30 parts of PEMP (a pentaerythritol tetrakis(3-mercaptopropionate), mercapto group content: 8.19 mmol/g, manufactured by SC Organic Chemical Co., Ltd.) and 10 parts of DPMP (a dipentaerythritol hexakis(3-mercaptopropionate), mercapto group content: 7.66 mmol/g, manufactured by SC Organic Chemical Co., Ltd.) as the polyfunctional thiol (B), 0.003 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 0.2 parts of D-918 (rutile titanium oxide, manufactured by Sakai Chemical Industry Co., Ltd.) and 4.5 parts of Optbeads 2000M (melamine resin-silica composite particles, manufactured by Nissan Chemical Corporation) as the scattering agent (E), 0.2 parts of Irgacure 184 (manufactured by BASF) and 0.1 parts of Irgacure TPO as the photopolymerization initiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-11) was 1.82.

<Experimental Example 12>

A mixture of 100 parts of A-TMPT (a trimethylolpropane triacrylate, (meth)acrylate group content: 10.0 mmol/g, manufactured by Shin-Nakamura Chemical Co., Ltd.) as the polyfunctional (meth)acrylate (A), 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-12) was 1/0 (infinite due to division by zero).

<Experimental Example 13>

A mixture of 100 parts of TMMP (a trimethylolpropane tris(3-mercaptopropionate), mercapto group content: 7.53 mmol/g, manufactured by SC Organic Chemical Co., Ltd.) as the polyfunctional thiol (B), 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-13) was 0.

<Experimental Example 14>

A mixture of 50 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 50 parts of isobornyl methacrylate ((meth)acrylate group content: 4.50 mmol/g, manufactured by Tokyo Chemical Industry Co., Ltd.) as another compound, 0.002 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-14) was 0.

<Experimental Example 15>

A mixture of 50 parts of AD-TMP (a ditrimethylolpropane tetraacrylate, acrylate group content: 8.51 mmol/g, manufactured by Shin-Nakamura Chemical Co., Ltd.) as the polyfunctional (meth)acrylate (A), 50 parts of octyl thioglycolate (mercapto group content: 4.89 mmol/g, manufactured by Tokyo Chemical Industry Co., Ltd.) as another compound, 0.5 parts of triphenyl phosphite (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-6) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-15) was 0.43/0 (infinite due to division by zero).

<Experimental Example 16>

A mixture of 20 parts of triallyl isocyanurate (allyl group content: 12.0 mmol/g, manufactured by Tokyo Chemical Industry Co., Ltd.) and 25 parts of isobornyl methacrylate ((meth)acrylate group content: 4.50 mmol/g, manufactured by Tokyo Chemical Industry Co., Ltd.) as other compounds, 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 1 part of Irgacure TPO-L (manufactured by BASF) as the photoinitiator (F), and 54 parts of the dispersion resin (G-3) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-16) was 0/0 (infinite due to division by zero).

<Experimental Example 17>

A mixture of 60 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-17) was 1.56.

<Experimental Example 18>

A mixture of 60 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.5 parts of triphenyl phosphite (manufactured by Tokyo Chemical Industry Co., Ltd.) as the reaction retarder (C), 0.4 parts of green quantum dots and 0.07 parts of red quantum dots as the quantum dots (D), 0.4 parts of Irgacure 184 (manufactured by BASF) as the photoinitiator (F), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-18) was 1.56.

<Experimental Example 19>

A mixture of 60 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 40 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.004 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-19) was 1.56.

<Experimental Example 20>

A mixture of 35 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 65 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.004 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-20) was 0.56.

<Experimental Example 21>

A mixture of 90 parts of AD-TMP (a ditrimethylolpropane tetraacrylate, (meth)acrylate group content: 8.51 mmol/g, manufactured by Shin-Nakamura Chemical Co., Ltd.) as the polyfunctional (meth)acrylate (A), 10 parts of PEMP (a pentaerythritol tetrakis(3-mercaptopropionate), mercapto group content: 8.19 mmol/g, manufactured by SC Organic Chemical Co., Ltd.) as the polyfunctional thiol (B), 0.004 parts of tetraethylthiuram disulfide (manufactured by Tokyo Chemical Industry Co., Ltd.) as the reaction retarder (C), 0.4 parts of green quantum dots and 0.07 parts of red quantum dots as the quantum dots (D), 5 parts of Epostar MS (benzoguanamine-formaldehyde condensate particles, manufactured by Nippon Shokubai Co., Ltd.) as the scattering agent (E), 0.4 parts of Irgacure 184 (manufactured by BASF) as the photoinitiator (F), and 1.37 parts of the dispersion resin (G-2) as the dispersion resin (G) was prepared. After gently shaking the mixture by hand, it was stirred until homogeneous using a homodisper. The molar ratio of (meth)acrylate groups in the polyfunctional (meth)acrylate (A) to mercapto groups in the polyfunctional thiol (B) in the resulting quantum dot-containing composition (X-21) was 9.36.

<Pot Life Evaluation of Quantum Dot-Containing Compositions (X)>

The viscosity of each of the obtained quantum dot-containing compositions (X-1) to (X-21) was measured immediately after their preparation. Subsequently, each quantum dot-containing composition was transferred to a capped sample tube and left to stand at 25°C for 24 hours while being stirred using a roller stirrer. Then, the viscosity of each quantum dot-containing composition was measured again. The pot life of each quantum dot-containing composition was evaluated by calculating the rate of increase between the viscosity immediately after preparation and the viscosity after 24 hours using the following formula.

Viscosity increase rate (%) = (viscosity after 24 hours / viscosity immediately after preparation) $\times$ 100

Viscosity after 24 hours (cps)

Viscosity immediately after preparation (cps)

The evaluation criteria are as follows.

A: Increase rate was less than 120%. Good.

B: Increase rate was 120% or more but less than 150%. Acceptable.

C: Increase rate was 150% or more but less than 200%. Marginally acceptable.

D: Increase rate was 200% or more, or gel formation was observed. Unacceptable.

[Table 2]

| | Exp. Ex. 1 | Exp. Ex. 2 | Exp. Ex. 3 | Exp. Ex. 4 | Exp. Ex. 5 | Exp. Ex. 6 | Exp. Ex. 7 | Exp. Ex. 8 | Exp. Ex. 9 | Exp. Ex. 10 | Exp. Ex. 11 |
|---|---|---|---|---|---|---|---|---|---|---|---|
| Quantum dot-containing composition | X-1 | X-2 | X-3 | X-4 | X-5 | X-6 | X-7 | X-8 | X-9 | X-10 | X-11 |
| Amount of polyfunctional (meth)acrylate (A) (parts) — A-DCP | 60 | | | | | | | | | | |
| A-TMPT | | 50 | 20 | | 80 | 50 | 50 | 40 | 50 | 50 | 50 |
| AD-TMP | | | 30 | 45 | | | 15 | 15 | 10 | 10 | 10 |
| A-DPH | | 5 | | | | 5 | | | | | |
| UV-7650B | | | | | | | | | | | |
| EGMP-4 | 40 | | | | | | | | | | |
| Amount of poly-functional thiol (B) (parts) — TMMP | | 45 | | | 20 | | | | | | |
| PEMP | | | 50 | 40 | | 35 | 35 | | 40 | 40 | 30 |
| MT PE1 | | | | | | | | 45 | | | |
| DPMP | | | | 15 | | 10 | | | | | 10 |
| Molar ratio of (meth)acrylate group to mercapto group | 1.84 | 1.48 | 1.12 | 0.87 | 5.31 | 1.52 | 2.19 | 1.60 | 1.79 | 1.79 | 1.82 |
| Amount of reaction retarder (C) (parts) — Hydroquinone | 1 | | | | | | | | | | |
| Triphenyl phosphite | | 0.5 | | 0.3 | | 0.3 | | | | | |
| Tetraethylthiuram disulfide | | | 0.002 | | 0.001 | | 0.002 | 0.002 | 0.003 | 0.003 | 0.003 |
| Amount of quantum dot emitter (D) (parts) — Green quantum dots | 0.4 | 0.4 | 0.4 | 0.4 | 0.4 | 0.4 | 0.4 | 0.4 | 0.4 | 0.4 | 0.4 |
| Red quantum dots | 0.07 | 0.07 | 0.07 | 0.07 | 0.07 | 0.07 | 0.07 | 0.07 | 0.07 | 0.07 | 0.07 |
| Amount of scattering agent (E) (parts) — D-918 | | | | 0.25 | 0.2 | | 1 | | 0.2 | 0.2 | 0.2 |
| MBX-5 | 5 | 5 | 5 | | | | | | | | |
| MS | | | | 4 | 6 | 7 | | 5 | | | |
| 2000M | | | | | | | | | 4.5 | 4.5 | 4.5 |
| Amount of photoinitiator (F) (parts) — Irg184 | 0.3 | 0.6 | 0.2 | 0.3 | 0.8 | 0.8 | 0.4 | 0.3 | | | |
| TPO | | | | | | | | | 0.2 | 0.2 | 0.2 |
| TPO-L | | | | | | | | | 0.1 | 0.1 | 0.1 |

23

(continued)

| | | Exp. Ex. 1 | Exp. Ex. 2 | Exp. Ex. 3 | Exp. Ex. 4 | Exp. Ex. 5 | Exp. Ex. 6 | Exp. Ex. 7 | Exp. Ex. 8 | Exp. Ex. 9 | Exp. Ex. 10 | Exp. Ex. 11 |
|---|---|---|---|---|---|---|---|---|---|---|---|---|
| Amount of dispersion resin (G) (parts) | G-1 | 1.37 | | | | | | 1 | | | | |
| | G-2 | | | | | | | | 1.37 | | | |
| | G-3 | | | | | | 1.37 | | | | | |
| | G-4 | | | 1.37 | | | | | | 1.37 | | |
| | G-5 | | | | | | | | | | 1.37 | |
| | G-6 | | | | 1.37 | 1.37 | | 1.37 | | | | 1.37 |
| Amount of other compounds (parts) | Triallyl isocyanurate | | | | | | | | | | | |
| | Isobornyl methacrylate | | | | | | | | | | | |
| | Octyl thioglycolate | | | | | | | | | | | |
| Pot life evaluation | | C | B | A | B | A | B | A | A | A | A | A |

[Table 3]

| | | Exp. Ex. 12 | Exp. Ex. 13 | Exp. Ex. 14 | Exp. Ex. 15 | Exp. Ex. 16 | Exp. Ex. 17 | Exp. Ex. 18 | Exp. Ex. 19 | Exp. Ex. 20 | Exp. Ex. 21 |
|---|---|---|---|---|---|---|---|---|---|---|---|
| Quantum dot-containing composition | | X-12 | X-13 | X-14 | X-15 | X-16 | X-17 | X-18 | X-19 | X-20 | X-21 |
| Amount of polyfunctional (meth)acrylate (A) (parts) | A-DCP | | | | | | | | | | |
| | A-TMPT | 100 | | | | | | | | | |
| | AD-TMP | | | | 50 | | 60 | 60 | 60 | 35 | 90 |
| | A-DPH | | | | | | | | | | |
| | UV-7650B | | | | | | | | | | |
| | EGMP-4 | | | | | | | | | | |
| Amount of polyfunctional thiol (B) (parts) | TMMP | | 100 | | | | | | | | |
| | PEMP | | | 50 | | | 40 | 40 | 40 | 65 | 10 |
| | MT PE1 | | | | | | | | | | |
| | DPMP | | | | | | | | | | |
| Molar ratio of (meth)acrylate group to mercapto group | | 1/0 | 0 | 0 | 0.43/0 | 0/0 | 1.56 | 1.56 | 1.56 | 0.56 | 9.36 |
| Amount of reaction retarder (C) (parts) | Hydroquinone | | | | | | | | | | |
| | Triphenyl phosphite | | | | 0.5 | | | 0.5 | | | |
| | Tetraethylthiuram disulfide | 0.002 | 0.002 | 0.002 | | | | | 0.004 | 0.004 | 0.004 |
| Amount of quantum dot light emitter (D) (parts) | Green quantum dots | 0.4 | 0.4 | 0.4 | 0.4 | 0.4 | 0.4 | 0.4 | 0.4 | 0.4 | 0.4 |
| | Red quantum dots | 0.07 | 0.07 | 0.07 | 0.07 | 0.07 | 0.07 | 0.07 | 0.07 | 0.07 | 0.07 |
| Amount of scattering agent (E) (parts) | D-918 | | | | | | | | | | |
| | MBX-5 | 5 | 5 | 5 | 5 | 5 | 5 | 5 | 5 | 5 | 5 |
| | 2000M | | | | | | | | | | |
| Amount of photoinitiator (F) (parts) | Irg184 | 0.4 | 0.4 | 0.4 | 0.4 | | 0.4 | 0.4 | 0.4 | 0.4 | 0.4 |
| | TPO | | | | | 1 | | | | | |
| | TPO-L | | | | | | | | | | |

(continued)

| Amount of dispersion resin (G) (parts) | | Exp. Ex.. 12 | Exp. Ex.. 13 | Exp. Ex.. 14 | Exp. Ex.. 15 | Exp. Ex.. 16 | Exp. Ex.. 17 | Exp. Ex.. 18 | Exp. Ex.. 19 | Exp. Ex.. 20 | Exp. Ex.. 21 |
|---|---|---|---|---|---|---|---|---|---|---|---|
| Amount of dispersion resin (G) (parts) | G-1 | | | | | | | | | | |
| | G-2 | | | | | | 1.37 | 1.37 | 1.37 | 1.37 | 1.37 |
| | G-3 | | | | | 54 | | | | | |
| | G-4 | | | | | | | | | | |
| | G-5 | | | | | | | | | | |
| | G-6 | 1.37 | 1.37 | 1.37 | 1.37 | | | | | | |
| Amount of other compounds (parts) | Triallyl isocyanurate | | | | | 20 | | | | | |
| | Isobornyl methacrylate | | | 50 | | 25 | | | | | |
| | Octyl thioglycolate | | | | 50 | | | | | | |
| Pot life evaluation | | A | A | A | B | B | D | B | A | A | A |

EP 4 787 028 A1

The meanings of the abbreviations in Tables 2 and 3 are as follows.

A-DCP: A-DCP (dimethylol-tricyclodecane diacrylate), manufactured by Shin-Nakamura Chemical Co., Ltd.

A-TMPT: A-TMPT (trimethylolpropane triacrylate), manufactured by Shin-Nakamura Chemical Co., Ltd.

AD-TMP: AD-TMP (ditrimethylolpropane tetraacrylate), manufactured by Shin-Nakamura Chemical Co., Ltd.

A-DPH: A-DPH (dipentaerythritol hexaacrylate), manufactured by Shin-Nakamura Chemical Co., Ltd.

UV-7650B: Shikou UV-7650B (urethane acrylate), manufactured by The Nippon Synthetic Chemical Industry Co., Ltd.

EGMP-4: EGMP-4 (tetraethylene glycol bis(3-mercaptopropionate)), manufactured by SC Organic Chemical Co., Ltd.

TMMP: TMMP (trimethylolpropane tris(3-mercaptopropionate)), manufactured by SC Organic Chemical Co., Ltd.

PEMP: PEMP (pentaerythritol tetrakis(3-mercaptopropionate)), manufactured by SC Organic Chemical Co., Ltd.

MT PE1: KarenzMT PE1 (pentaerythritol tetrakis(3-mercaptobutyrate)), manufactured by Showa Denko K.K.

DPMP: DPMP (dipentaerythritol hexakis(3-mercaptopropionate)), manufactured by SC Organic Chemical Co., Ltd.

D-918: D-918 (rutile titanium oxide), manufactured by Sakai Chemical Industry Co., Ltd.

MBX-5: Techpolymer MBX-5 (crosslinked polymethyl methacrylate particles), manufactured by Sekisui Kasei Co., Ltd.

MS: Eposter MS (benzoguanamine-formaldehyde condensate particles), manufactured by Nippon Shokubai Co., Ltd.

2000M: Optobeads 2000M (melamine resin-silica composite particles), manufactured by Nissan Chemical Corporation

Irg 184: Irgacure 184 (alkylphenone photoinitiator), manufactured by BASF

TPO: Irgacure TPO (acyl phosphine oxide photoinitiator), manufactured by BASF

TPO-L: Irgacure TPO-L (acyl phosphine oxide photoinitiator), manufactured by BASF

<Manufacturing of Quantum Dot-Containing Sheets>

Using the quantum dot-containing compositions (X-1) to (X-21) from Experimental Examples 1 to 21, laminated sheet members (Y-1) to (Y-21) were obtained as follows. Tables 4 and 5 show the quantum dot-containing compositions used in the preparation, the properties of the sheet members, and the results of the performance test described below.
Each of the quantum dot-containing compositions (X-1) to (X-21) was applied onto the primed side of a 125 $\mu$m thick PET film (one side matted, opposite side primed, no barrier layer) using a roll coater so that the quantum dot layer thickness would be approximately 50 $\mu$m or less (preferably 2 $\mu$m to 30 $\mu$m). This was then laminated to another 125 $\mu$m thick PET film having the same configuration, with the primed side facing the ink-coated side. Then, using an UV irradiation device (120 W/cm$^2$ high-pressure mercury lamp), UV irradiation was performed for curing with a cumulative light dose of 1000 mJ/cm$^2$. Each sample was left to stand at 40°C for 12 hours to complete the curing reaction. The sheet members (Y-1) to (Y-21) with a thickness of approximately 350 $\mu$m were thus obtained.

(Performance Test)

<Evaluation of Haze Value and Total Light Transmittance>

The haze values and total light transmittance of the sheet members (Y-1) to (Y-21) were measured using the method described above.

<Evaluation of Photoluminescence Quantum Yield of Sheet Members>

The photoluminescence quantum yield of the sheet members (Y-1) to (Y-21) was measured using the method described above. The evaluation criteria are as follows.

A: Quantum yield of 85% or higher. Good.

B: Quantum yield of 75% or higher but lower than 85%. Acceptable.

C: Quantum yield of 65% or higher but lower than 75%. Marginally acceptable.

D: Quantum yield below 65%. Unacceptable.

<Evaluation of Adhesion>

Using a 100 mm × 100 mm blade manufactured by Dumbbell Co., Ltd., ten sheets were punched out for each of the sheet members (Y-1) to (Y-21). Whether the edges of each sheet member had lifted or peeled was visually evaluated. The evaluation criteria are as follows.

A: Zero instances of lifting or peeling. Good.

B: One instance of lifting or peeling. Acceptable.

C: Two instances of lifting or peeling. Marginally acceptable.

D: Three or more instances of lifting or peeling. Unacceptable.

<Evaluation of Aging Durability>

Three 50mm × 50mm pieces were cut from each sheet member (Y-1) to (Y-21) and stored for 1000 hours under the three conditions specified below. The retention rate of the peak light emission intensity for green and red light before and after storage was calculated using the following formula.

Retention rate of peak light emission intensity (%) = (peak light emission intensity after 1000 hours of storage / peak light emission intensity before storage) × 100

The storage conditions were as follows.

Condition 1: 60°C, 90% RH, with blue LEDs illuminated

Condition 2: 65°C, 95% RH, with blue LEDs off

Condition 3: 85°C, with blue LEDs off

The evaluation criteria for aging durability are as follows.

A: Retention rate of 90% or higher. Good.

B: Retention rate of 75% or higher but lower than 90%. Acceptable.

C: Retention rate of 60% or higher but lower than 75%. Marginally acceptable.

D: Retention rate below 60%. Unacceptable.

<Evaluation of Fading at Edges of Sheet Members>

For the sheet members (Y-1) to (Y-21) stored for 1000 hours under Condition 1 in the above aging durability evaluation, the length of faded areas starting from the edges was measured at three points using a digital microscope (VHS-5000, manufactured by Keyence Corporation), and fading was evaluated based on the average length. The evaluation criteria are as follows.

A: Faded area was 100 $\mu$m or less. Good.

B: Faded area was 100 $\mu$m or more but 200 $\mu$m or less. Acceptable.

C: Faded area was 200 $\mu$m or more but 500 $\mu$m or less. Marginally acceptable.

D: Faded area was 500 $\mu$m or more. Unacceptable.

[Table 4]

| | | Exp. Ex. 22 | Exp. Ex. 23 | Exp. Ex. 24 | Exp. Ex. 25 | Exp. Ex. 26 | Exp. Ex. 27 | Exp. Ex. 28 | Exp. Ex. 29 | Exp. Ex. 30 | Exp. Ex. 31 | Exp. Ex. 32 |
|---|---|---|---|---|---|---|---|---|---|---|---|---|
| Sheet member (Y) | | Y-1 | Y-2 | Y-3 | Y-4 | Y-5 | Y-6 | Y-7 | Y-8 | Y-9 | Y-10 | Y-11 |
| Ink composition (X) | | X-1 | X-2 | X-3 | X-4 | X-5 | X-6 | X-7 | X-8 | X-9 | X-10 | X-11 |
| Haze value | | 97.1 | 97.2 | 91.1 | 96.4 | 98.9 | 98 | 97.1 | 96 | 98 | 97.8 | 98.2 |
| Total light transmittance (%) | | 68.8 | 62.1 | 63.4 | 68.1 | 65.2 | 61 | 59.4 | 69.1 | 67 | 68.8 | 68.6 |
| PL quantum yield of laminate (%) | | A | C | B | A | A | B | B | A | A | A | A |
| | Adhesion | B | A | A | B | B | A | A | A | A | A | A |
| Durability | 60°C 90% RH, with LED | C | B | B | B | B | B | A | A | A | A | A |
| | 65°C 95% RH, without LED | B | A | B | B | B | A | A | A | A | A | A |
| | 85°C, without LED | B | A | B | A | A | A | A | A | A | A | A |
| | Edge fading | B | A | A | B | B | A | A | A | A | A | A |

[Table 5]

| | | Exp. Ex. 33 | Exp. Ex. 34 | Exp. Ex. 35 | Exp. Ex. 36 | Exp. Ex. 37 | Exp. Ex. 38 | Exp. Ex. 39 | Exp. Ex. 40 | Exp. Ex. 41 | Exp. Ex. 42 |
|---|---|---|---|---|---|---|---|---|---|---|---|
| Sheet member (Y) | | Y-12 | Y-13 | Y-14 | Y-15 | Y-16 | Y-17 | Y-18 | Y-19 | Y-20 | Y-21 |
| Ink composition (X) | | X-12 | X-13 | X-14 | X-15 | X-16 | X-17 | X-18 | X-19 | X-20 | X-21 |
| Haze value | | 96.5 | 95.6 | *95.4* | 95.6 | 95.8 | Not evaluated due to thickening preventing coating | 45.3 | Not evaluated due to incomplete curing | 96.6 | 96.3 |
| Total light transmittance (%) | | 66.6 | 65.4 | 67.7 | 65.5 | 63.2 | | 84.2 | | 63.8 | 63.5 |
| PL quantum yield of laminate (%) | | B | B | A | A | B | | D | | B | B |
| Adhesion | | B | D | B | B | B | | B | | C | D |
| Durability | 60°C 90% RH, with LED | D | D | D | D | D | | A | | D | D |
| | 65°C 95% RH, without LED | D | D | D | D | C | | A | | D | D |
| | 85°C, without LED | D | D | D | D | C | | A | | D | D |
| Edge fading | | D | D | D | D | D | | A | | D | D |

As shown in Tables 4 and 5, the cured film of Experimental Example 33, in which no polyfunctional thiol (B) was used, exhibited insufficient oxygen barrier properties, resulting in significantly degraded durability and edge fading.

In Experimental Example 34, the quantum dot-containing composition did not cure because no polyfunctional (meth)acrylate (A) was used. This led to insufficient adhesion and oxygen barrier properties, resulting in significantly degraded adhesion, durability, and edge fading.

In Experimental Example 35, because a monofunctional (meth)acrylate was used instead of a polyfunctional (meth)acrylate (A), the crosslink density of the cured film was insufficient, resulting in insufficient oxygen barrier properties and significantly degraded durability and edge fading.

In Experimental Example 36, because a monofunctional thiol was used instead of a polyfunctional thiol (B), the crosslink density of the cured film was insufficient, resulting in insufficient oxygen barrier properties and significantly degraded durability and edge fading.

In Experimental Example 37, a relatively good pot life was obtained even though no reaction retarder (C) was used because a monofunctional (meth)acrylate and a low-reactivity polyfunctional arylate were used instead of a polyfunctional (meth)acrylate (A). However, the crosslinking degree of the cured film was insufficient, resulting in insufficient oxygen barrier properties and significantly degraded durability and edge fading.

In Experimental Example 38, because no reaction retarder (C) was used, significant thickening occurred within about 10 minutes after stirring until homogeneous, making coating impossible. Therefore, various performance evaluations of the laminate could not be performed.

Experimental Example 39 is an example that does not contain a scattering agent (E). While positive results were obtained for durability and edge fading, it was found that excitation light was less likely to be wavelength-converted by the quantum dots (D), making it difficult to obtain a sufficient optical path length.

Experimental Example 40 is an example that does not contain a photoinitiator (F). In this example, crosslinking reaction hardly proceeded under UV irradiation, causing delamination, and therefore various performance evaluations of the laminate could not be performed. Thus, it is necessary to use a photoinitiator (F) or an additive that can replace it.

In Experimental Examples 41 and 42, because the ratio of the number of moles of (meth)acrylate groups in the polyfunctional (meth)acrylate to the number of moles of mercapto groups in the polyfunctional thiol that was either too low or too high, the crosslink density and thus the oxygen barrier properties were insufficient, resulting in degraded durability and edge fading.

On the other hand, Examples 22 to 32, which are sheet members formed of a quantum dot-containing composition containing a polyfunctional (meth)acrylate (A), polyfunctional thiol (B), reaction retarder (C), scattering agent (D), photoinitiator (E), and quantum dot emitter (F) within suitable ranges, exhibited a good, well-balanced haze value, total light transmittance, photoluminescence quantum yield of the laminate, adhesion, durability, and edge fading resistance.

Among the above experimental examples, Experimental Examples 29 to 32 exhibited particularly superior performance.

Experimental Examples 29 to 32 had an average number of functional groups per molecule of polyfunctional (meth)acrylate (A) and polyfunctional thiol (B) within the preferred range of 2.5 or more. Therefore, compared to Experimental Example 1, in which the average number of functional groups per molecule of the above components was outside this range, the cured film had sufficient crosslink density, resulting in good durability and edge fading resistance.

Since Experimental Examples 29 to 32 contained a dispersant (G), they exhibited superior photoluminescence quantum yield compared to Experimental Example 23 containing no dispersant.

Since Experimental Examples 29 to 32 contained fine particles having a melamine and/or benzoguanamine structure as the scattering agent, they exhibited superior photoluminescence quantum yield compared to Experimental Examples 24 and 28, which did not contain such particles.

Since the ratio of the number of moles of the (meth)acrylate groups of the polyfunctional (meth)acrylate to the number of moles of the mercapto groups of the polyfunctional thiol was within the more preferred range of 1.0 to 2.5 in Experimental Examples 29 to 32, the cured film exhibited sufficient crosslink density, resulting in good durability and edge fading resistance compared to Experimental Examples 25 and 26, in which the ratio was outside this range.

Since Experimental Examples 29 to 32 used at least one dispersant (G) selected from acrylic resins, polyurethane resins, polyester resins, and polyethyleneimine resins, improved compatibility with the quantum dots (D) could be achieved, resulting in good photoluminescence quantum yield compared to Experimental Example 27, which used a thioether resin.

In this example, degradation could be suppressed to 500 $\mu$m or less from the sheet edges, preferably to 250 $\mu$m or less, more preferably to 150 $\mu$m or less, and most preferably to 50 $\mu$m or less.

<Luminance Experiment with and without Partially Reflective Sheet (Dichroic Filter)>

The following samples were used in the experiment.

(Sample 1)
Direct BL (blue light) + QD sheet + prism

(Sample 2)
Direct BL (blue light) + QD-coated dichroic filter + prism

(Sample 3)
Direct BL (blue light) + dichroic filter + QD sheet + prism

(Sample 4)
Direct-BL (blue light) + QD sheet + prism + DBEF

(Sample 5)
Direct BL (blue light) + QD-coated dichroic filter + prism + DBEF

(Sample 6)
Direct BL (blue light) + dichroic filter + QD sheet + prism + DBEF

The QD sheet contains quantum dots that emit red light and green light. The QD-coated dichroic filter was prepared by forming a QD layer by coating the surface of a dichroic filter with a QD solution containing quantum dots that emit red light and green light. DBEF is a reflective polarizing film (Dual Brightness Enhancement Film) manufactured by 3M.

In this experiment, the relationship between wavelength and luminance (light emission intensity) was measured for the group of Samples 1 to 3 and the group of Samples 4 to 6. Light emission intensity was measured using a spectrofluorometer (FP-8500, manufactured by JASCO Corporation).

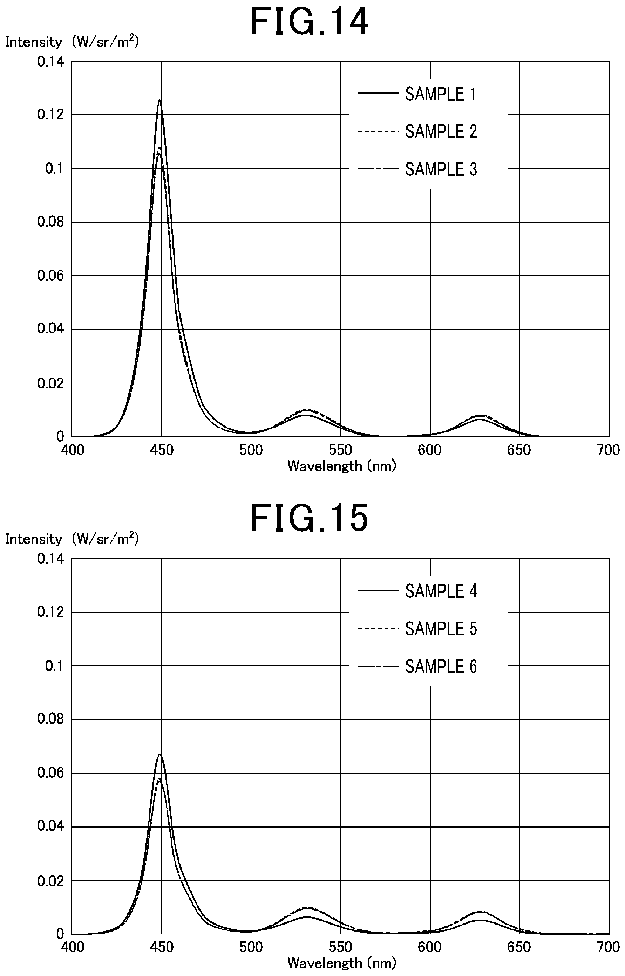

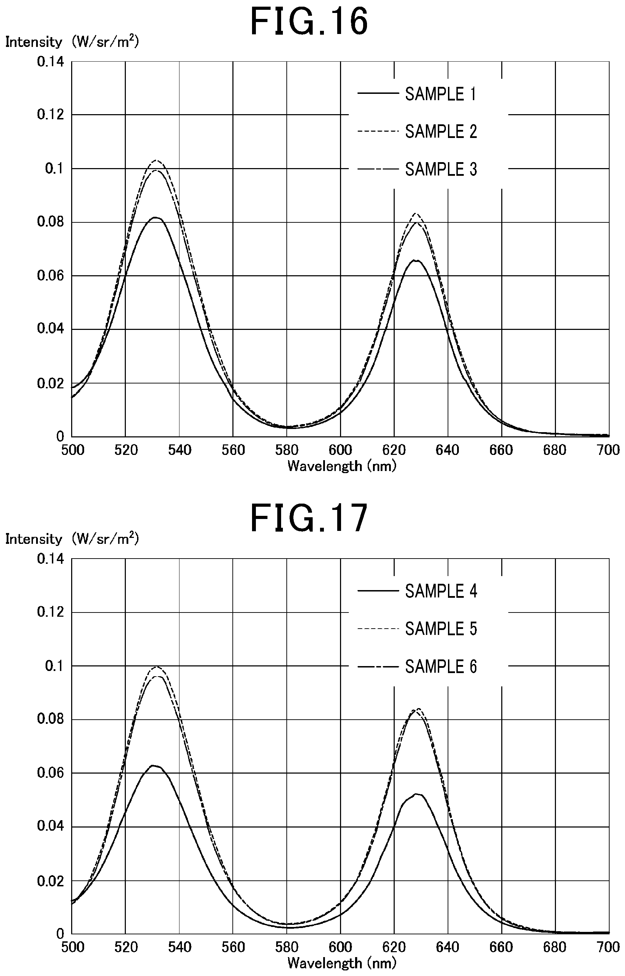

Fig. 14 shows a graph of the relationship between wavelength (400 nm to 700 nm) and light emission intensity for Samples 1 to 3. Fig. 15 shows a graph of the relationship between wavelength (400 nm to 700 nm) and light emission intensity for Samples 4 to 6. Fig. 16 shows a graph of the relationship between wavelength (500 nm to 700 nm) and light emission intensity for Samples 1 to 3. Fig. 17 shows a graph of the relationship between wavelength (500 nm to 700 nm) and light emission intensity for Samples 4 to 6.

As shown in Figs. 14 and 15, Samples 1 and 4, which do not have a partially reflective sheet, exhibited high blue light emission intensity. In contrast, it was possible to suppress the blue light emission intensity of Samples 2, 3, 5, and 6, which have a partially reflective sheet. In this example, the use of I-III-VI chalcopyrite quantum dots, which have a higher absorption coefficient at 450 nm than InP, enabled more effective suppression of the blue light emission intensity.

Furthermore, as shown in Figs. 16 and 17, Samples 1 and 4, which do not have a partially reflective sheet, exhibited reduced red and green light emission intensities, whereas Samples 2, 3, 5, and 6, which have a partially reflective sheet, exhibited increased red and green light emission intensities.

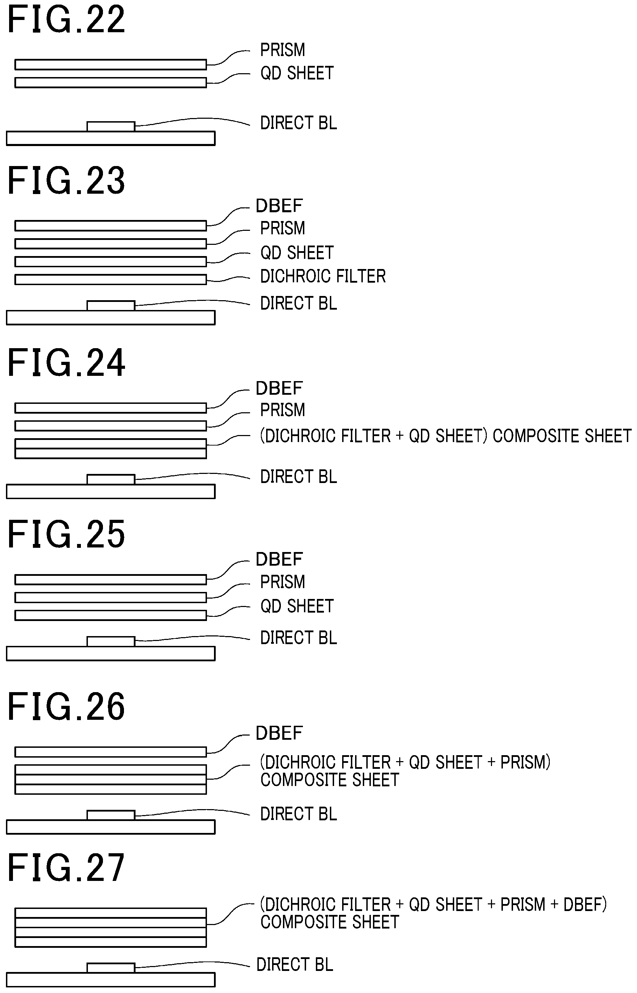

(Sample 7: See Fig. 22)
Direct BL (blue light) + QD sheet + prism

(Sample 8: See Fig. 23)
Direct BL (blue light) + dichroic filter + QD sheet + prism + DBEF

(Sample 9: See Fig. 24)
Direct BL (blue light) + (dichroic filter + QD sheet) composite sheet + prism + DBEF

(Sample 10: See Fig. 25)
Direct-BL (blue light) + QD sheet + prism + DBEF

(Sample 11: See Fig. 26)
Direct BL (blue light) + (dichroic filter + QD sheet + prism) composite sheet + DBEF

(Sample 12: See Fig. 27)
Direct BL (blue light) + (dichroic filter + QD sheet + prism + DBEF) composite sheet

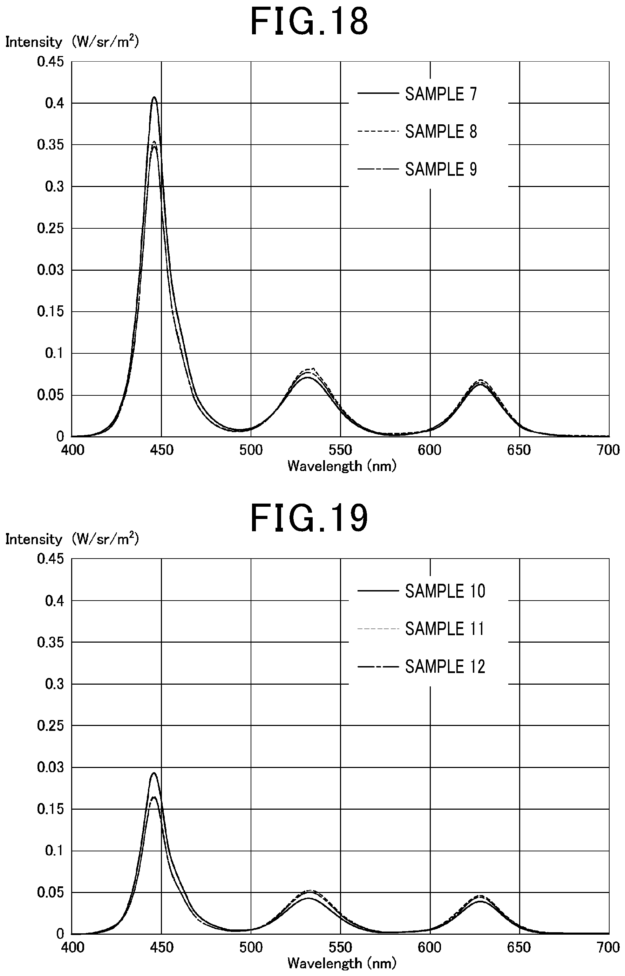

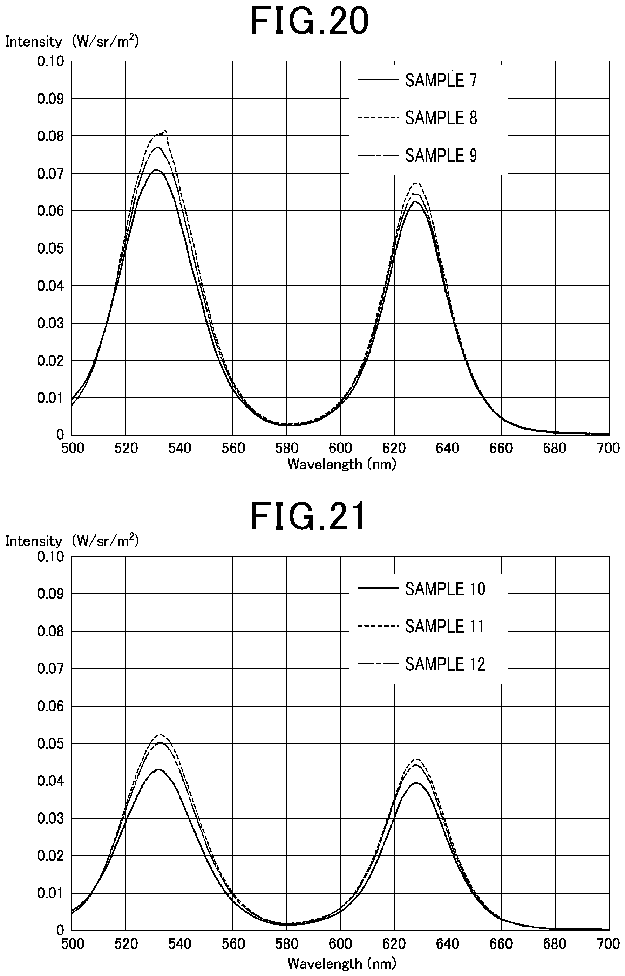

Fig. 18 shows a graph of the relationship between wavelength (400 nm to 700 nm) and light emission intensity for Samples 7 to 9. Fig. 19 shows a graph of the relationship between wavelength (400 nm to 700 nm) and light emission intensity for Samples 10 to 12. Fig. 20 shows a graph of the relationship between wavelength (500 nm to 700 nm) and light emission intensity for Samples 7 to 9. Fig. 21 shows a graph of the relationship between wavelength (500 nm to 700 nm) and light emission intensity for Samples 10 to 12. Note that in Figs. 20 and 21, the range of the vertical axis representing light emission intensity is expanded compared to Figs. 18 and 19.

As shown in Figs. 18 and 19, Samples 7 and 10, which do not have a partially reflective sheet, exhibited high blue light emission intensity, whereas Samples 8, 9, 11, and 12, which have a partially reflective sheet, were able to suppress the blue light emission intensity.

Furthermore, as shown in Figs. 20 and 21, Samples 7 and 10, which do not have a partially reflective sheet, exhibited reduced red and green light emission intensities, whereas Samples 8, 9, 11, and 12, which have a partially reflective sheet, exhibited increased red and green light emission intensities.

Thus, it was found that the use of a partially reflective sheet enables suppressing blue light emission intensity while enhancing red and green light emission intensities. This enhances the luminance of white light emitted by wavelength conversion of the light from the blue LED and suppresses luminance unevenness.

In this example, the use of I-III-VI chalcopyrite quantum dots, which have a higher absorption coefficient at 450 nm than InP, enabled more effective suppression of the blue light emission intensity and increased the optical density (OD) value.

<Experimental Results for Sheet Thickness>

In the experiment, a 10 $\mu$m thick quantum dot-containing sheet containing 40% green quantum dots, 15% dispersant, and a transparent resin as the balance was formed and placed under a blue backlight (Example 1).

In addition, a 10 $\mu$m thick quantum dot-containing sheet containing 30% red quantum dots, 5% dispersant, and a transparent resin as the balance was formed and placed under a blue backlight (Example 2).

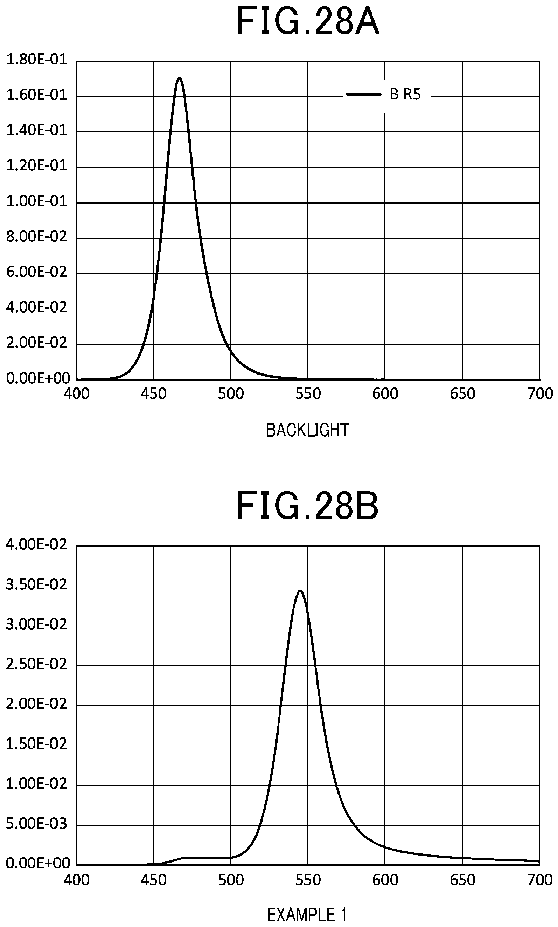

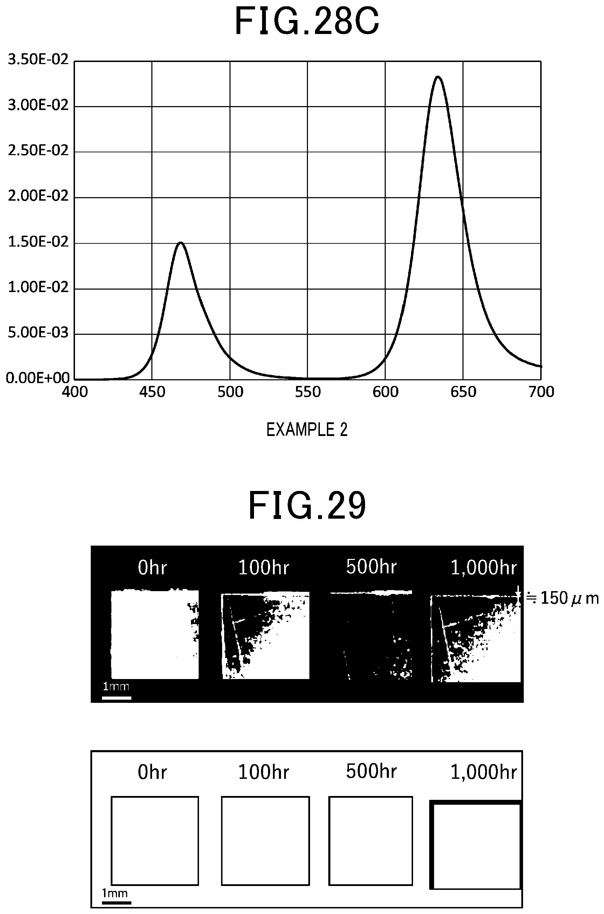

Fig. 28A shows the light emission spectrum of the backlight, Fig. 28B shows the light emission spectrum of Example 1, and Fig. 28C shows the light emission spectrum of Example 2.

The ratio of the blue wavelength light emission intensity of Example 1 to the peak intensity of the backlight was 1.2%, while the ratio of the blue wavelength light emission intensity of Example 2 to the peak intensity of the backlight was 10.3%. This indicates that blue light leakage was favorably suppressed in both Examples 1 and 2, but the effect was particularly pronounced in Example 1, the green quantum dot-containing sheet.

Furthermore, the peak intensity ratio of Example 1 shown in Fig. 28B relative to the peak intensity of the backlight in Fig. 28A was approximately 246.3%, and the peak intensity ratio of Example 2 shown in Fig. 28C relative to the peak intensity of the backlight in Fig. 28A was approximately 61.4%. In both cases, color conversion was efficiently performed, but the effect was particularly pronounced in Example 1, the green quantum dot-containing sheet.

<Experiment on Degradation from Sheet Edges>

Fig. 29 shows experimental results confirming the degradation mode over time from 0 to 1000 hours during an RA illumination test (temperature: 60°C, humidity 90%) using the quantum dot-containing sheet of Example 1. The upper part of Fig. 29 shows photographs, while the lower part shows respective schematic diagrams. After approximately 1000 hours, the edges darkened somewhat, showing degradation of about 150 $\mu$m, but the degradation could be suppressed to 500 $\mu$m or less.

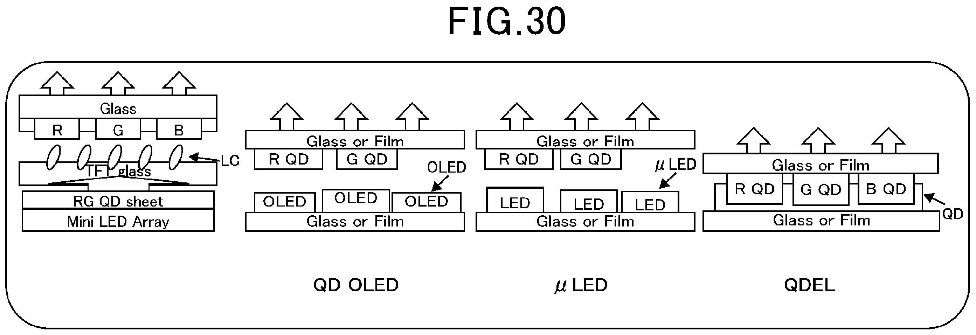

The QD sheet of this example can be effectively applied to display systems, and for example, it can be preferably applied to MiNiLEDs as shown in Fig. 30. Because the QD sheet of this example has a high absorption coefficient, it is also effective for QD OLEDs and $\mu$LEDs as shown in Fig. 30.

In the InP comparative example, to achieve the same absorption coefficient as in this example, the sheet thickness must be increased. Specifically, in the green quantum dot case shown in Fig. 13A, to achieve an absorption coefficient similar to this example and obtain high light emission intensity using InP, the sheet thickness must be increased by approximately six times or more. While InP cannot be applied to QD OLEDs or $\mu$LEDs, which particularly require thin films, for this reason, the present example enables achieving high light emission intensity even with a sheet thickness of 50 $\mu$m or less, preferably 30 $\mu$m or less, more preferably 20 $\mu$m or less, and even more preferably 10 $\mu$m or less (see the experimental results in Figs. 13A, 13B, 28B, and 28C).

[Industrial Applicability]

The present invention provides quantum dots that enable obtaining a sheet with a quantum dot layer thickness of 50 µm or less and good aging durability against degradation from the sheet edges; quantum dot-containing sheets using the quantum dots; and backlight devices or display devices. Using the quantum dot-containing sheets of the present invention, backlight devices, display devices, liquid crystal display elements, and the like having stable wavelength conversion characteristics can be provided.

The present application is based on Japanese Patent Application No. 2023-170553 filed on September 29, 2023. The entire content of the application is incorporated herein by reference.

**Claims**

1. Quantum dots that do not comprise RoHS-regulated substances and have a higher absorption coefficient at 450 nm than InP.

2. The quantum dots according to claim 1, comprising a core formed from an I-III-VI chalcopyrite system.

3. The quantum dots according to claim 2, wherein
   Group I includes at least one of Ag and Cu, Group III includes at least one of Ga and In, and Group VI includes at least one of S, Se and Te.

4. The quantum dots according to claim 1, comprising Ga and Zn, wherein
   the ratio of Zn to Ga is Zn/Ga = 0.1 or more and 10 or less.

5. The quantum dots according to claim 1, comprising a core, a shell layer formed on the surface of the core via a buffer layer, and a ligand formed on the surface of the shell layer, wherein
   the shell layer is formed from ZnS.

6. A quantum dot-containing sheet formed by curing a quantum dot-containing composition including the quantum dots according to claim 1, wherein
   the quantum dot-containing sheet has a quantum dot layer thickness of 50 µm or less.

7. The quantum dot-containing sheet according to claim 6, wherein
   degradation from an edge of the sheet is 500 µm or less.

8. The quantum dot-containing sheet according to claim 6, wherein
   the sheet is an integrated sheet with a dichroic filter or a prism sheet.

9. A backlight device or a display device comprising the quantum dot-containing sheet according to claim 6, wherein
   the backlight device or display device is configured with a narrow bezel.

10. A display device, wherein
    the quantum dot-containing sheet is applied to a QD OLED or a µLED.

11. A method for manufacturing the quantum dot-containing sheet according to claim 6, the method comprising:

    generating a quantum dot-containing composition containing the quantum dots; and
    curing the quantum dot-containing composition to obtain the quantum dot-containing sheet, wherein
    the quantum dot-containing composition contains the quantum dots, a polyfunctional (meth)acrylate, a polyfunctional thiol, and a reaction retarder.

12. The method for manufacturing the quantum dot-containing sheet according to claim 11, wherein
    the reaction retarder is selected from at least one of phosphite compounds and dithiocarbamate compounds.

13. The method for manufacturing the quantum dot-containing sheet according to claim 11, wherein
    a dithiocarbamate compound is selected as the reaction retarder.

**14.** The method for manufacturing the quantum dot-containing sheet according to claim 11, further containing a scattering agent, wherein
the scattering agent includes at least one selected from melamine and benzoguanamine structures.

**15.** The method for manufacturing the quantum dot-containing sheet according to claim 11, further containing a dispersion resin, wherein
the dispersion resin includes at least one selected from acrylic resin, polyurethane resin, polyester resin, and polyethyleneimine resin.

**16.** The method for manufacturing the quantum dot-containing sheet according to claim 11, wherein
the polyfunctional (meth)acrylate and the polyfunctional thiol have an average number of functional groups per molecule of 2.5 or more.

# FIG.1

# FIG.2

# FIG.3

# FIG.4

# FIG.5

# FIG.6

# FIG.7

# FIG.8

60

69 {

68

67 {

66

65 {

64

63

1

81

80

# FIG.9

# FIG.10

# FIG.11A

# FIG.11B

# FIG.12

EP 4 787 028 A1

# FIG.13A

# FIG.13B

FIG.13C

FIG.13D

# FIG.14

Intensity (W/sr/m²)

SAMPLE 1
SAMPLE 2
SAMPLE 3

Wavelength (nm)

# FIG.15

Intensity (W/sr/m²)

SAMPLE 4
SAMPLE 5
SAMPLE 6

Wavelength (nm)

# FIG.16

Intensity (W/sr/m²)

Wavelength (nm)

SAMPLE 1
SAMPLE 2
SAMPLE 3

# FIG.17

Intensity (W/sr/m²)

Wavelength (nm)

SAMPLE 4
SAMPLE 5
SAMPLE 6

# FIG.18

Intensity (W/sr/m²)

Wavelength (nm)

Legend: SAMPLE 7, SAMPLE 8, SAMPLE 9

# FIG.19

Intensity (W/sr/m²)

Wavelength (nm)

Legend: SAMPLE 10, SAMPLE 11, SAMPLE 12

# FIG.20

Intensity (W/sr/m²)

Wavelength (nm)

# FIG.21

Intensity (W/sr/m²)

Wavelength (nm)

# FIG.22

PRISM
QD SHEET

DIRECT BL

# FIG.23

DBEF
PRISM
QD SHEET
DICHROIC FILTER

DIRECT BL

# FIG.24

DBEF
PRISM
(DICHROIC FILTER + QD SHEET) COMPOSITE SHEET

DIRECT BL

# FIG.25

DBEF
PRISM
QD SHEET

DIRECT BL

# FIG.26

DBEF
(DICHROIC FILTER + QD SHEET + PRISM)
COMPOSITE SHEET

DIRECT BL

# FIG.27

(DICHROIC FILTER + QD SHEET + PRISM + DBEF)
COMPOSITE SHEET

DIRECT BL

# FIG.28A

BACKLIGHT

# FIG.28B

EXAMPLE 1

# FIG.28C

EXAMPLE 2

# FIG.29

FIG.30

## INTERNATIONAL SEARCH REPORT

| International application No. |
| --- |
| **PCT/JP2024/034946** |

**A. CLASSIFICATION OF SUBJECT MATTER**

*G02B 5/20*(2006.01)i; *G02F 1/1335*(2006.01)i; *G02F 1/13357*(2006.01)i
FI:  G02B5/20; G02F1/13357; G02F1/1335 505

According to International Patent Classification (IPC) or to both national classification and IPC

**B. FIELDS SEARCHED**

Minimum documentation searched (classification system followed by classification symbols)

G02B5/20; G02F1/1335; G02F1/13357

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-182126 A (NS MATERIALS INC.) 25 November 2021 (2021-11-25)<br>claims, paragraphs [0001], [0037], [0040], [0050], [0097], [0122], etc. | 1-16 |
| A | JP 2023-69198 A (SHIN-ETSU CHEMICAL CO., LTD.) 18 May 2023 (2023-05-18)<br>entire text, all drawings | 1-16 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 November 2024** | **03 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/034946**

| Patent document cited in search report | | | Publication date (day/month/year) | Patent family member(s) | | | Publication date (day/month/year) |
|---|---|---|---|---|---|---|---|
| JP | 2021-182126 | A | 25 November 2021 | (Family: none) | | | |
| JP | 2023-69198 | A | 18 May 2023 | CN | 118541625 | A | |
| | | | | entire text, all drawings | | | |
| | | | | WO | 2023/079907 | A1 | |
| | | | | TW | 202336211 | A | |
| | | | | KR | 10-2024-0101795 | A | |

Form PCT/ISA/210 (patent family annex) (July 2022)

**REFERENCES CITED IN THE DESCRIPTION**

**Patent documents cited in the description**

- JP 2016511709 T
- JP 5940079 B
- WO 2018056469 A
- KR 101969561 B1
- JP 2017032918 A
- JP 2019086555 A
- JP 2018124412 A
- JP 2017214486 A
- JP 2023170553 A